# EUROPEAN PATENT APPLICATION

(11) **EP 3 890 142 A1**
(43) Date of publication of application: **06.10.2021**
(21) Application number: 18943979.7
(22) Date of filing: 21.12.2018
(51) Int. Cl.: H02J 7/00

(54) **CHARGING CONTROL METHOD, DEVICE TO BE CHARGED, WIRELESS CHARGING DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: WAN, Shiming, Dongguan, Guangdong 523860 (CN)
(74) Representative: Penza, Giancarlo
(86) International application number: PCT/CN2018/122656
(87) International publication number: WO 2020/124550

(57) **Abstract**

A charging control method, a device to be charged (230), a wireless charging device (220) and a storage medium. The method is applied to the device to be charged (230), and comprises: detecting a battery voltage and a battery current of a battery (235), and detecting an output current of a wireless charging receiving unit (231) (S301); sending, according to the detected battery voltage, battery current and output current, a control instruction to the wireless charging device (220), wherein the control instruction is used for indicating that the transmitting power of the wireless charging device (220) needs to be adjusted, such that the transmitting power of the wireless charging device (220) satisfies the charging power required by the battery (235) in the device to be charged (230), and the output current of the wireless charging receiving unit (231) in the device to be charged (230) meets a preset current demand range (S302); and the wireless charging receiving unit (231) receiving the adjusted wireless charging signal of the wireless charging device (220) to charge the battery (235) (S303).

## Description

### TECHNICAL FIELD

Embodiments of the present disclosure relate to the field of wireless communication technologies, and particularly to a charging control method, a device to-be-charged, a wireless charging device, and a storage medium.

### BACKGROUND

The mobile terminal industry is developing faster and faster. Accordingly, mobile terminals are no longer limited for making calls; rather, they can be used by people for listening to music, watching videos, browsing web pages and playing games. Although these newly added functions have brought a pleasant experience to people, all of them consume a large amount of energy, causing the mobile terminals to have an increasing battery capacity.

At present, the terminals are mainly charged by means of cables. In this way, when a user desires to charge a terminal, the terminal to be charged needs to be connected to a charging device through a charging cable for charging. Once the charging cable is missing, the terminal cannot be charged. Although wireless charging has the advantage of not requiring the charging cable, it is still unable to overcome the defect of generating too much heat during charging and to improve the efficiency of wireless charging at the same time, on the basis of the existing standards for the wireless charging technology (such as the Qi standard).

### SUMMARY

In view of this, embodiments of the present disclosure aim at providing a charging control method, a device to-be-charged, a wireless charging device and a storage medium, by which the heat generated when charging the device to-be-charged can be reduced, and the charging efficiency can also be improved at the same time.

The technical solutions of the embodiments of the present disclosure can be implemented as follows.

In a first aspect, the embodiments of the present disclosure provide a charging control method applicable to a device to-be-charged. The method includes:
detecting a battery voltage and a battery current of a battery, and detecting an output current of a wireless charging receiver unit;
sending, according to the detected battery voltage, the detected battery current and the detected output current, a control instruction to a wireless charging device, the control instruction is configured to instruct the wireless charging device to adjust a transmit power thereof, thereby making the transmit power of the wireless charging device meet a charging power required by the battery of the device to-be-charged, and making the output current of the wireless charging receiver unit of the device to-be-charged in a preset current required range; and
receiving, by the wireless charging receiver unit, an adjusted wireless charging signal sent from the wireless charging device, to charge the battery.

In a second aspect, the embodiments of the present disclosure provide a charging control method applicable to a wireless charging device. The method includes:
receiving a control instruction sent from a device to-be-charged, when performing wireless charging on the device to-be-charged; and
adjusting, according to the control instruction, a transmit power of the wireless charging device, thereby making the transmit power of the wireless charging device meet a charging power required by a battery of the device to-be-charged, and making an output current of a wireless charging receiver unit of the device to-be-charged in a preset current required range.

In a third aspect, the embodiments of the present disclosure provide a device to-be-charged. The device to-be-charged includes a detection unit, a first control unit, a wireless charging receiver unit and a charging management unit.

The detection unit is configured to detect a battery voltage and a battery current of a battery, and detect an output current of the wireless charging receiver unit.

The first control unit is configured to send, according to the detected battery voltage, the detected battery current and the detected output current, a control instruction to a wireless charging device. The control instruction is configured to instruct the wireless charging device to adjust a transmit power thereof, thereby making the transmit power of the wireless charging device meet a charging power required by the battery of the device to-be-charged, and making the output current of the wireless charging receiver unit of the device to-be-charged in a preset current required range.

The wireless charging receiver unit is configured to receive an adjusted wireless charging signal sent from the wireless charging device.

The charging management unit is configured to charge the battery according to the adjusted wireless charging signal.

In a fourth aspect, the embodiments of the present disclosure provide a wireless charging device. The wireless charging device includes a wireless charging transmission unit and a second control unit.

The wireless charging transmission unit is configured to transmit a wireless charging signal.

The second control unit is configured to: receive a control instruction sent from a device to-be-charged, when performing wireless charging on the device to-be-charged; and adjust, according to the control instruction, a transmit power of the wireless charging device, thereby making the transmit power of the wireless charging device meet a charging power required by a battery of the device to-be-charged, and making an output current of a wireless charging receiver unit of the device to-be-charged in a preset current required range.

In a fifth aspect, the embodiments of the present disclosure provide a device to-be-charged. The device to-be-charged includes a first memory and a first processor.

The first memory is configured to store a computer program capable of running on the first processor.

The first processor is configured to execute operations of the method described in the first aspect when running the computer program.

In a sixth aspect, the embodiments of the present disclosure provide a wireless charging device. The wireless charging device includes a second memory and a second processor.

The second memory is configured to store a computer program capable of running on the second processor.

The second processor is configured to execute operations of the method described in the second aspect when running the computer program.

In a seventh aspect, the embodiments of the present disclosure provide a computer storage medium that stores a charging control program. The charging control program, when being executed by the first processor, causes the operations of the method described in the first aspect to be implemented; or the charging control program, when being executed by the second processor, causes the operations of the method described in the second aspect to be implemented.

The embodiments of the present disclosure provide a charging control method, a device to-be-charged, a wireless charging device and a storage medium. The method is applied to the device to-be-charged. A battery voltage and a battery current of a battery as well as an output current of a wireless charging receiver unit are first detected. According to the detected battery voltage and current and the detected output current, a control instruction is sent to a wireless charging device. Then, an adjusted wireless charging signal sent from the wireless charging device is received by the wireless charging receiver unit to charge the battery. The control instruction is configured to instruct the wireless charging device to adjust a transmit power thereof, thereby making the transmit power of the wireless charging device meet a charging power required by the battery of the device to-be-charged, and making the output current of the wireless charging receiver unit of the device to-be-charged in a preset current required range. As such, a voltage difference between the output voltage of the wireless charging receiver unit and the battery voltage can be effectively controlled, thereby reducing the heat generated when charging the device to-be-charged, and improving the charging efficiency at the same time.

### DESCRIPTION OF THE DRAWINGS

FIG. 1 is a schematic diagram illustrating the structural composition of a wireless charging system provided by related technical solutions;
FIG. 2 is a schematic diagram illustrating the structural composition of a wireless charging system provided by the embodiments of the disclosure;
FIG. 3 is a schematic flowchart of a charging control method provided by the embodiments of the disclosure;
FIG. 4 is a schematic diagram illustrating the structural composition of a device to-be-charged provided by the embodiments of the disclosure;
FIG. 5 is a schematic flowchart of another charging control method provided by the embodiments of the disclosure;
FIG. 6 is a detailed flowchart of a charging control method provided by the embodiments of the disclosure;
FIG. 7 is a schematic diagram illustrating the structural composition of a device to-be-charged provided by the embodiments of the disclosure;
FIG. 8 is a schematic diagram illustrating specific hardware structures of a device to-be-charged provided by the embodiments of the disclosure;
FIG. 9 is a schematic diagram illustrating the structural composition of a wireless charging device provided by the embodiments of the disclosure; and
FIG. 10 is a schematic diagram illustrating specific hardware structures of a wireless charging device provided by the embodiments of the disclosure.

### DETAILED DESCRIPTION

In order to comprehensively understand the features and technical contents of the embodiments of the present disclosure, the implementation of the embodiments of the present disclosure will be described in detail below in conjunction with the drawings. The attached drawings are only for the purpose of reference and explanation, and should not be regarded as limiting the embodiments of the present disclosure.

Wireless charging technology originates from wireless power transmission technology. In the light of different principles of wireless charging, there are mainly three wireless charging methods, i.e., electromagnetic induction (or magnetic coupling) type, radio wave type and electromagnetic resonance type wireless charging. And at present, the prevailing standards for wireless charging include Qi standard, Power Matters Alliance (PMA) standard, Alliance for Wireless Power (A4WP) standard, and the like. Among them, both the Qi standard and the PMA standard direct at the electromagnetic induction type wireless charging, and the A4WP standard directs at the electromagnetic resonance type wireless charging. In the embodiments of the present disclosure, the electromagnetic induction type wireless charging technology is adopted for the device to-be-charged, and energy is transmitted between a wireless charging device (such as a wireless charging dock) and the device to-be-charged through a magnetic field. That is, the battery of the device to-be-charged can be charged without a charging cable between the wireless charging device and the device to-be-charged, which makes the charging more convenient.

Understandably, the device to-be-charged may refer to a terminal, and the terminal may include, but is not limited to, a device that receives and sends communication signals via a wired line (for example, via Public Switched Telephone Network (PSTN), Digital Subscriber Line (DSL), a digital cable or direct cable connection, and/or via another data connection/network) and/or via a wireless interface (for example, a wireless interface for cellular network, Wireless Local Area Network (WLAN), digital TV network such as Digital Video Broadcasting Handheld (DVB-H) network, satellite network, or Amplitude Modulation-Frequency Modulation (AM-FM) broadcast transmitter, and/or a wireless interface of another communication terminal). Among them, the terminal that communicates via a wireless interface may be referred to as a "wireless communication terminal", a "wireless terminal" and/or a "mobile terminal". The mobile terminal mentioned here includes, but is not limited to, a mobile terminal device such as a mobile phone, a tablet computer, a notebook computer, a palmtop, a Personal Digital Assistant (PDA), a Portable Media Player (PMP) and a navigation device, and may also include a fixed terminal device such as a digital TV and a desktop computer. In addition, the device to-be-charged involved in the embodiments of the present disclosure may also include a portable power source, which can store the received charging energy to provide energy to other electronic devices. In the embodiments of the present disclosure, this is not specifically limited.

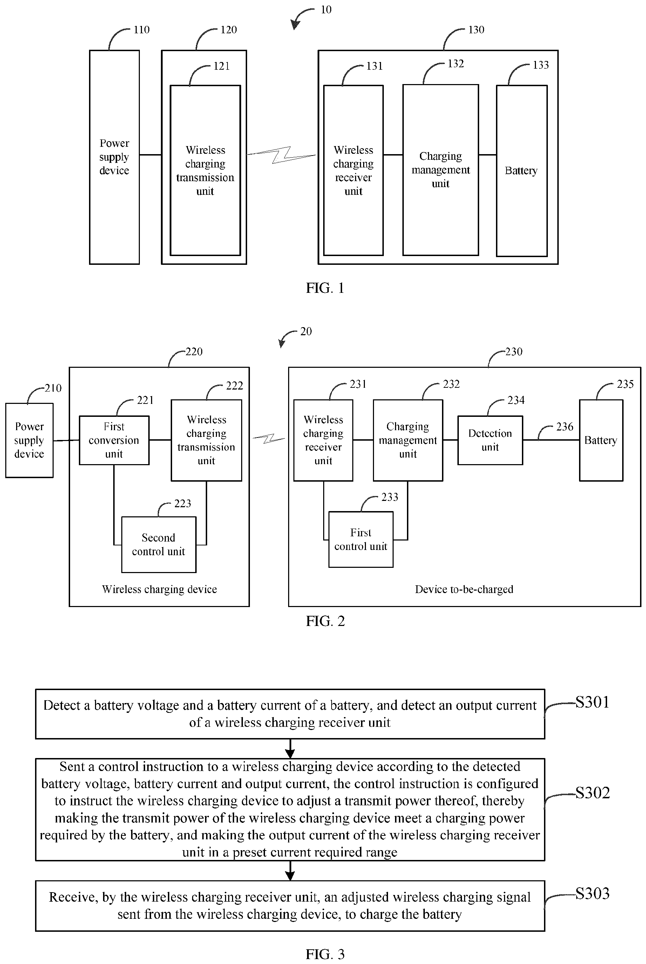

The wireless charging method provided by the related technical solutions will be introduced below in conjunction with FIG. 1.

Referring to FIG. 1, a schematic diagram of the structural composition of a wireless charging system 10 provided by the related technical solutions is illustrated. As shown in FIG. 1, the wireless charging system 10 includes a power supply device 110, a wireless charging device 120 and a device to-be-charged 130. The wireless charging device 120 includes a wireless charging transmission unit 121. The device to-be-charged 130 includes a wireless charging receiver unit 131, a charging management unit 132 and a battery 133. Here, the wireless charging device 120 may be for example a wireless charging dock, and the device to-be-charged 130 may be for example a terminal.

After the power supply device 110 is connected with the wireless charging device 120, an output voltage and an output current of the power supply device 110 are transmitted to the wireless charging device 120.

The wireless charging device 120 may convert, by the internal wireless charging transmission unit 121, the output voltage and the output current of the power supply device 110 into a wireless charging signal (an electromagnetic signal) for transmission. For example, the wireless charging transmission unit 121 may convert the output current of the power supply device 110 into an alternating current, and convert, by a transmitting coil or a transmitting antenna, the alternating current into a wireless charging signal.

The device to-be-charged 130 may receive, by the wireless charging receiver unit 131, the wireless charging signal transmitted by the wireless charging transmission unit 121, and convert the wireless charging signal into an output voltage and an output current of the wireless charging receiver unit 131. For example, the wireless charging receiver unit 131 may convert, by a receiving coil or a receiving antenna, the wireless charging signal transmitted by the wireless charging transmission unit 121 into an alternating current, and perform operations such as rectification and/or filtering on the alternating current to convert it into the output voltage and output current of the wireless charging unit 131.

In some implementations, before the wireless charging, the wireless charging device 120 may pre-negotiate, with the device to-be-charged 130, a transmit power of the wireless charging transmission unit 121. Assuming that the transmit power negotiated by the wireless charging device 120 and the device to-be-charged 130 is 5W, the output voltage and the output current of the wireless charging receiver unit 131 are generally 5V and 1A, respectively. Assuming that the transmit power negotiated by the wireless charging device 120 and the device to-be-charged 130 is 10.8W, the output voltage and the output current of the wireless charging receiver unit 131 are generally 9V and 1.2A, respectively.

If the output voltage of the wireless charging receiver unit 131 is not suitable for being directly applied to the two ends of the battery 133, the charging management unit 132 needs to perform constant voltage and/or constant current control to obtain a charging voltage and/or charging current desired by the battery 133 of the device to-be-charged 130.

The charging management unit 132 may be configured to convert the output voltage of the wireless charging receiver unit 131, thereby making the output voltage and/or output current of the charging management unit 132 meet the charging voltage and/or charging current desired by the battery 133. In some implementations, the charging management unit 132 may be, for example, a charging integrated circuit (IC), a buck-boost conversion circuit, or a low dropout regulator (LDO).

The charging management unit 132 is confined to a low power conversion efficiency (which is also referred to as energy conversion efficiency, or circuit conversion efficiency), which causes the unconverted electric energy to be lost in the form of heat. This heat will be gathered inside the device to-be-charged 130. However, both the design space and heat dissipation space of the device to-be-charged 130 are small (for example, the mobile terminal used by the user tends to getting lighter and thinner in terms of the physical size thereof, meanwhile, a large number of electronic components are densely arranged in the mobile terminal to improve the performance of the mobile terminal). This not only increases the design difficulty of the charging management unit 132, but also makes it difficult to remove the heat gathered in the device to-be-charged 130 in time, which in turn causes abnormality of the device to-be-charged 130.

In order to reduce the heat generated by the charging management unit 132, the wireless charging device 120 may output the charging power at a low voltage and high current, for example, a charging power of 5V/4A may be adopted. As a possible implementation, the wireless charging transmission unit 121 may generate the wireless charging signal based on 5V/4A. Accordingly, the wireless charging receiver unit 131 may convert the wireless charging signal into an output voltage/output current of 5V/4A. However, the large charging current of 4A will cause the transmitting coil of the wireless charging transmission unit 121 and the receiving coil of the wireless charging receiver unit 131 to generate a large amount of heat during power transmission. The heat generated during charging would affect the charging speed and the life of the product, and would further reduce the reliability of the product.

As can be seen, how to reduce the heat generated during wireless charging has become an urgent problem to be solved.

In some related technologies, a low charging power is adopted for reducing the heat generated by the coils during the wireless charging process. For example, the wireless charging device 120 outputs a charging power of up to 7.5W to charge the device to-be-charged 130. In this way, the charging speed is slow, and it needs to take a long time to fully charge the device to-be-charged 130.

In some other related technologies, different from adopting a low charging power, the wireless charging device 120 increases the charging power (for example, the charging power is increased from 7.5W to 10W) for wireless charging, in order to increase the charging speed. However, this charging method fails to reduce the charging duration to an expected duration (for example, less than 100 minutes). As described above, in the case where a high power is adopted for the wireless charging, it is inevitable to cause the coils or the charging management unit 132 to generate heat. In a wireless charging system adopting the magnetic coupling technology, the distance between the wireless charging device 120 and the device to-be-charged 130 is usually short, and thus the heat generated by the coil of the wireless charging device 120 is transferred to the device to-be-charged 130. As for the device to-be-charged 130 itself, the heat generated by the coil and the charging management unit would be transferred to the battery to a certain extent, and heat is also generated by the battery itself during the charging process. All of them would cause the temperature of the battery to easily exceed the safe charging range. Once the safe range is exceeded due to the heat generated by the coil, the heat generated by the charging management unit and the heat generated by the battery, it has to charge with a low charging power (for example, 7.5W) or suspend the charging, so as to ensure safety of the charging. Therefore, in this related technology, although the maximum charging power of the wireless charging is increased, the duration in which the maximum charging power is adopted is short, that is, high-power wireless charging is enabled only for a short time period, which cannot shorten the charging duration to the expected duration.

In addition, for reducing the heat generation, some related technologies adopt heat dissipation means, such as graphene or a heat dissipation plate, to dissipate the heat during the charging process. However, such heat dissipation means fail to provide an ideal heat dissipation effect, and instead increase the cost of the product, occupy the internal space of the product, and affect the appearance of the product.

In order to solve the above-mentioned problems, the embodiments of the present disclosure provide a wireless charging system. The wireless charging system may include a wireless charging signal transmitting device (for example, the above-mentioned wireless charging device) and a wireless charging signal receiving device (for example, the above-mentioned device to-be-charged). Here, wireless communication can be performed between the wireless charging device and the device to-be-charged, and the transmit power of the wireless charging device can be adjusted according to a control instruction sent by the device to-be-charged, thereby making the transmit power of the wireless charging device match a charging voltage and/or charging current currently required by the battery. As a result, the wireless charging power can be increased based on the charging requirements of the device to-be-charged, and the charging speed can be improved accordingly.

In addition, in order to avoid a too large output current of the wireless charging receiver unit, the device to-be-charged can also detect the output current of the wireless charging receiver unit. Accordingly, the wireless charging device can adjust the transmit power according to the control instruction sent by the device to-be-charged, thereby making the output current of the wireless charging receiver unit meet a preset condition.

By controlling the output current of the wireless charging receiver unit through the wireless charging device, the heat generated by the wireless charging transmission unit (which includes a transmitting coil) and the heat generated by the wireless charging receiver unit (which includes a receiving coil) can be controlled to reduce the heat generated during the charging process. As a result, compared with related technologies, the duration during which the wireless charging is performed with a high power can be prolonged, the charging speed can be increased, and the total charging duration can be shortened.

The wireless charging means provided by the embodiments of the present disclosure will be described in detail below with reference to FIG. 2.

Referring to FIG. 2, a schematic diagram of the structural composition of a wireless charging system 20 provided by the embodiments of the present disclosure is illustrated. As shown in FIG. 2, the wireless charging system 20 includes a power supply device 210, a wireless charging device 220 and a device to-be-charged 230.

The power supply device 210 is configured to provide electric energy to the wireless charging device 220. The power supply device 210 may include a rectifier unit, a transformer unit, a control unit, a charging interface and the like. It can convert an input alternating current into a direct current for output to the wireless charging device 220. For example, the power supply device 210 may be an adapter, a power bank, an on-board power supply or the like.

In some implementations, the power supply device 210 may also provide the alternating current directly to the wireless charging device 220. For example, the power supply device 210 may be an alternating current power source. In the case where the power supply device 210 is an alternating current power source, the wireless charging device 220 further includes a unit or module for converting the alternating current into a direct current, such as a rectification and filtering unit and a DC/DC conversion unit.

The wireless charging device 220 is configured to convert the direct current or alternating current provided by the power supply device 210 into a wireless charging signal (electromagnetic signal), so as to perform power transmission wirelessly.

In some implementations, as shown in FIG. 2, the wireless charging device 220 may include a first conversion unit 221, a wireless charging transmission unit 222 and a second control unit 223. Those skilled in the art can understand that the structural composition of the wireless charging device 220 shown in FIG. 2 does not limit the wireless charging device, and the wireless charging device may include more or less components than those shown in the figure, or may combine some of the components, or may have a different arrangement of the components.

It should be noted that the power supply device 210 may be a common adapter or a voltage regulation adapter (that is, the adapter itself can adjust the magnitude of the output voltage), or may even be a mobile power supply and the like. In the case where the power supply device 210 is a voltage regulation adapter, the first conversion unit 221 may be omitted from the wireless charging device 220. Here, the first conversion unit 221 is configured for direct current/direct current (DC/DC) voltage conversion, and is mainly configured to adjust the output voltage of the power supply device 101 to a fixed voltage value and provide it to the wireless charging transmission unit 222.

The wireless charging transmission unit 222 is configured to convert the direct current provided by the first conversion unit 221 or the direct current provided by the power supply device 210 into an alternating current that can be coupled to the transmitting coil, and convert, by the transmitting coil, the alternating current into the wireless charging signal for transmission.

In some implementations, the wireless charging transmission unit 222 may include an inverter unit and a resonance unit. The inverter unit may include a plurality of switches, and the transmit power can be adjusted by controlling the on time (that is, the duty ratio) of the switches. The resonant unit is configured to transmit the electric energy. For example, the resonant unit may include a capacitor and a transmitting coil. By adjusting the operating frequency of the resonance unit, the transmit power of the wireless charging transmission unit 222 can also be adjusted.

In some implementations, the wireless charging device 220 may be a wireless charging dock, a device with an energy storage function, or the like. In the case where the wireless charging device 220 is a device with an energy storage function, it further includes an energy storage module (for example, a lithium battery 235) which can obtain the electric energy from the external power supply device 210 and store it. In this way, the energy storage module may provide the electric energy to the wireless charging transmission unit 222. Those skilled in the art can understand that the wireless charging device 220 may obtain the electric energy from the external power supply device 210 in a wired or wireless manner. For the wired manner, the wireless charging device is connected for example through a charging interface (for example, a Type-C interface or a USB interface) to the power supply device 210 to obtain the electric energy. For the wireless manner, for example, the wireless charging device 220 may further include a wireless charging receiver unit 231 which can obtain the electric energy wirelessly from a device having a wireless charging function.

The second control unit 223 is configured to control the wireless charging process. For example, the second control unit 223 may communicate with the power supply device 210 to determine the output voltage and/or output current of the power supply device. Alternatively, the second control unit 223 may also communicate with the device to-be-charged 230 to for example acquire charging information (for example, voltage information of the battery 235 of the device to-be-charged 230, temperature information of the battery 235, and the charging mode information), and determine charging parameters (for example, the charging voltage and/or charging current) for the wireless charging.

Those skilled in the art can understand that the wireless charging device 220 may also include other related hardware, logic devices, units and/or codes to implement corresponding functions. For example, the wireless charging device 220 may further include a display unit (for example, a light emitting diode or an LED display screen) to display the charging status (for example, the charging is ongoing or terminated) in real time during the wireless charging process. The embodiments of this disclosure do not make specific limitations thereto.

In some implementations, as shown in FIG. 2, the device to-be-charged 230 includes a wireless charging receiver unit 231, a charging management unit 232, a first control unit 233, a detection unit 234, a battery 235 and a first charging channel 236. Those skilled in the art can understand that the structural composition of the device to-be-charged 230 shown in FIG. 2 does not limit the device to-be-charged, and the device to-be-charged may include more or less components than those shown in the figure, or may combine some of the components, or may have a different arrangement of the components.

It should be noted that the power supply device 210 provides power supply to the wireless charging device 220, the device to-be-charged 230 is placed on a surface of the wireless charging device 220, and the wireless charging device 220 charges the battery 235 of the device to-be-charged 230 through electromagnetic induction. Here, a wireless connection is established between the wireless charging device 220 and the device to-be-charged 230, and the two can communicate with each other.

In some implementations, the wireless communication includes, but is not limited to, Bluetooth communication, Wireless Fidelity (WiFi) communication, high carrier frequency-based short-range wireless communication, optical communication, ultrasonic communication, ultra-wideband communication, mobile communication and the like. The embodiments of this disclosure do not make specific limitations thereto.

The wireless charging receiver unit 231 is configured to convert, by a receiving coil, the wireless charging signal transmitted by the wireless charging transmission unit 222 of the wireless charging device 220 into an alternating current, and perform operations such as rectification and/or filtering on the alternating current, to convert the alternating current into a stable direct current for charging the battery 235.

In some implementations, the wireless charging receiver unit 231 includes a receiving coil and an AC/DC conversion unit. The AC/DC conversion unit is configured to convert the alternating current received by the receiving coil into a direct current.

In some implementations, the battery 235 may include a single cell or multiple cells. In the case where the battery 235 includes multiple cells, the multiple cells are connected in series. As a result, the charging voltage that the battery 235 can withstand is the sum of the charging voltages that the multiple cells can withstand, which enables the charging speed to be increased and the heat generated during the charging to be reduced.

In some implementations, the first charging channel 236 may be a wire. The charging management unit 232 may be provided on the first charging channel 236.

The charging management unit 232 is configured to perform step-up or step-down processing on the direct current output by the wireless charging receiver unit 231, to obtain the output voltage and output current of the first charging channel 236. In some implementations, the voltage value and current value of the direct current output by the first charging channel 236 meet the charging requirements of the battery 235, and this direct current can be directly applied to the battery 235 for charging.

In some implementations, the charging management unit 232 may include a voltage conversion unit. The voltage conversion unit may be a boost conversion circuit, a buck conversion circuit, a buck-boost conversion circuit or the LDO; or it may also be a charge pump circuit, or even a direct charging circuit and the like, which is not specifically limited in the embodiments of the present disclosure.

The detection unit 234 is configured to detect the voltage value and/or current value on the first charging channel 236. The voltage value and/or current value of the first charging channel 236 may refer to the voltage value and/or current value between the wireless charging receiver unit 231 and the charging management unit 232, that is, the output voltage value and/or output current value of the wireless charging receiver unit 231. Alternatively, the voltage value and/or current value on the first charging channel 306 may also refer to the voltage value and/or current value between the charging management unit 232 and the battery 235, that is, the output voltage value and/or output current value of the charging management unit 232.

In some implementations, the detection unit 234 may include a voltage detection unit 234 and a current detection unit 234. The voltage detection unit 234 may be configured to sample the voltage on the first charging channel 236 and send the sampled voltage value to the first control unit 233. In some implementations, the voltage detection unit 234 may sample the voltage on the first charging channel 236 by voltage division when being connected in series. The current detection unit 234 may be configured to sample the current on the first charging channel 236 and send the sampled current value to the first control unit 233. In some implementations, the current detection unit 234 may sample and detect the current on the first charging channel 236 through a current-sensing resistor and a galvanometer.

The first control unit 233 is configured to communicate with the second control unit 223 of the wireless charging device 220, and feedback the voltage value and/or current value detected by the detection unit 234 to the second control unit 223. In this way, the second control unit 223 can adjust, according to the feedback voltage value and/or current value, the transmit power of the wireless charging transmission unit 222, thereby making the voltage value and/or current value of the direct current output by the first charging channel 236 match the charging voltage value and/or current value required by the battery 235.

It should be noted that, "matching the charging voltage value and/or current value required by the battery 235" means that the voltage value and/or current value of the direct current output by the first charging channel 236 is equal to the charging voltage value and/or current value required by the battery 235, or fluctuates within a preset range (for example, the voltage value fluctuates up and down by 100 mV to 200 mV).

In some implementations, the first control unit 233 may be an independent Microcontroller Unit (MCU) in the device to-be-charged 230, thereby improving the control reliability. In some implementations, the first control unit 233 may also be an application processor (AP) in the device to-be-charged 230, thereby saving the hardware cost. The embodiments of this disclosure do not make specific limitations thereto.

Based on the wireless charging system 20 shown in FIG. 2, the embodiments of the present disclosure provide a charging control method. In the method, a battery voltage and a battery current of the battery as well as an output current of the wireless charging receiver unit are first detected. According to the detected battery voltage, the detected battery current and the detected output current, a control instruction is sent to the wireless charging device, where the control instruction is configured to instruct the wireless charging device to adjust the transmit power thereof. Based on the response made by the wireless charging device to the control instruction, the wireless charging receiver unit outputs an adjusted output voltage and an adjusted output current, such that the battery is charged according to the adjusted output voltage and the adjusted output current. In this way, during the process of charging the device to-be-charged, not only can the heat generated during charging the device to-be-charged be effectively reduced, but the charging efficiency can also be improved. Hereinafter, various embodiments of the present disclosure will be described in detail in conjunction with the accompanying drawings.

Referring to FIG. 3, a charging control method provided by the embodiments of the present disclosure is illustrated. The method is applied to a device to-be-charged. The method may include operations as follows.

At block S301, a battery voltage and a battery current of a battery of the device to-be-charged, as well as an output current of a wireless charging receiver unit of the device to-be-charged are detected.

At block S302, a control instruction is sent to a wireless charging device according to the detected battery voltage, the detected battery current and the detected output current, the control instruction is configured to instruct the wireless charging device to adjust a transmit power thereof, thereby making the transmit power of the wireless charging device meet a charging power required by the battery, and making the output current of the wireless charging receiver unit in a preset current required range.

At block S303, an adjusted wireless charging signal sent from the wireless charging device is received by the wireless charging receiver unit, to charge the battery.

It should be noted that, as for "the response made by the wireless charging device to the control instruction", it may mean that the wireless charging device first determines, according to the control instruction, a target transmit power value for the adjustment, and determines the corresponding target voltage value and target current value based on the target transmit power value, where the product of the target voltage value and the target current value is equal to the target transmit power value. Accordingly, the device to-be-charged receives the adjusted transmit power. In this way, the transmit power of the wireless charging device is enabled to meet the charging power required by the battery of the device to-be-charged, and the output current of the wireless charging receiver unit of the device is enabled to be in the preset current required range.

In some implementations, the sending, according to the detected battery voltage, the detected battery current and the detected output current, a control instruction to a wireless charging device includes:
determining, according to the detected battery voltage and the detected battery current, whether a received charging power from the wireless charging device meets the charging power required by the battery;
determining, according to the detected output current, whether the output current is in the preset current required range; and
sending the control instruction to the wireless charging device, upon determining the received charging power does not meet the charging power required by the battery and/or the output current is not in the preset current required range.

Further, in some implementations, the determining, according to the detected battery voltage and the detected battery current, whether the received charging power meets the charging power required by the battery includes:
when the battery is in a constant current charging stage, determining whether the battery current is in a preset constant current range, and determining the received charging power does not meet the charging power required by the battery upon determining the battery current is not in the preset constant current range; and
when the battery is in a constant voltage charging stage, determining whether the battery voltage is in a preset constant voltage range, and determining the received charging power does not meet the charging power required by the battery upon determining the battery voltage is not in the preset constant voltage range.

It should be noted that the charging power required by the battery of the device to-be-charged changes during the process of charging the device to-be-charged. For example, in the constant current (CC) charging stage, the charging power required by the battery increases as the battery voltage increases; and after entering the constant voltage (CV) charging stage, the charging power required by the battery gradually decreases. That is, for different charging stages, the charging current and charging voltage required by the battery are different. Accordingly, the charging power required by the battery is different for different charging stages. Thus, before the wireless charging is performed on the device to-be-charged, the charging current and/or charging voltage required by the battery for each charging stage may be preset, or even a preset range corresponding thereto may be preset (since the voltage value or current value is fluctuating, i.e., it is not a constant value). For example, taking a battery having a single cell and a capacity of 4000mA as an example, in a pre-charging stage, the charging current is 0.03C, and the charging voltage does not exceed 3.6V; in the constant current charging stage, the charging current may be preset to be any value between 1.2C and 1.5C, and the charging voltage is between 3.6V and 4.3V; and in the constant voltage charging stage, the cut-off value of the charging current is 0.01C, and the charging voltage may be preset to be any value between 4.3V and 4.38V In practice, both the preset charging current and/or charging voltage and the respective preset range (such as a preset constant current range and a preset constant voltage range) may be set as required, which is not specifically limited in the embodiments of the present disclosure.

In addition, the preset current required range indicates a preset range of the output current output by the wireless charging receiver unit of the device to-be-charged. For example, the preset current required range may be 0.95A to 1.05A. In practice, the preset current required range may be set as required, for example, both the maximum preset value (such as 1.05A) and the minimum preset value (such as 0.95A) may be set, or only the maximum preset value (such as 1.05A) may be set. The embodiments of the disclosure do not make specific limitation thereto.

It should also be noted that the device to-be-charged may also include a detection unit (such as the detection unit 234 shown in FIG. 2), for the detection of the battery voltage and battery current as well as the output current of the wireless charging receiver unit. The detection unit is generally connected in series in the detected circuit, to measure the voltage and the current flowing in the detected circuit. In the embodiments of the disclosure, the detection unit may be resistive (such as a current-sensing resistor), or may be a magnetic device (such as a current transformer, a Rogowski coil or a Hall sensor), or may also be a transistor (such as on-resistance between a drain and a source (RDS(ON)), ratiometric), which is not specifically limited in the embodiments of the present disclosure.

In some implementations, before the battery voltage and battery current of the battery as well as the output current of the wireless charging receiver unit are detected, the method further includes:
receiving a wireless charging signal transmitted by the wireless charging device, and converting, by the wireless charging receiver unit, the wireless charging signal to obtain an output voltage and output current output by the wireless charging receiver unit;
performing, by the charging management unit, voltage converting processing on the output voltage and output current of the wireless charging receiver unit, to obtain a first charging voltage and a first charging current; and
applying the first charging voltage and the first charging current to the battery, thereby charging the battery.

It should be noted that the wireless charging transmission unit of the wireless charging device includes a transmitting coil, the wireless charging receiver unit of the device to-be-charged includes a receiving coil, and energy is transmitted between the transmitting coil and the receiving coil through electromagnetic induction. In this manner, the wireless charging receiver unit receives and converts the wireless charging signal, and outputs the corresponding output voltage and output current obtained after conversion. Thereafter, the charging management unit performs voltage converting processing on the output voltage and output current to obtain the first charging voltage and the first charging current, and the first charging voltage and the first charging current are applied to the battery of the device to-be-charged for charging.

However, in the above charging process, in order to reduce the heat generation and improve the charging efficiency, it also detects in real time the battery voltage and battery current corresponding to the battery, as well as the output current of the wireless charging receiver unit. In this way, since wireless communication is enabled between the wireless charging device and the device to-be-charged, the transmit power of the wireless charging device can be adjusted according to the control instruction sent from the device to-be-charged, so as to make the transmit power of the wireless charging device match the charging voltage and/or charging current currently required by the battery. In addition, by adjusting the transmit power, the output current of the wireless charging receiver unit is enabled to meet a preset condition. Moreover, by controlling the output current of the wireless charging receiver unit by means of the wireless charging device, it is possible to control the heat generated by the wireless charging transmission unit (which includes the transmitting coil) and the heat generated by the wireless charging receiver unit (which includes the receiving coil), thereby further reducing the heat generated during the charging process.

Furthermore, in order to make the received charging power meet the charging power required by the battery, and make the output current of the wireless charging receiver unit in the preset current required range, in the embodiments of the present disclosure, control instructions may be simultaneously sent to the wireless charging device through two control feedback loops (for example, one control feedback loop provided based on the detected battery voltage and battery current, and the other control feedback loop provided based on the detected output voltage and/or output current of the wireless charging receiver unit). Based on the simultaneous control of the two feedback loops, the transmit power of the wireless charging device may be adjusted. According to the adjusted transmit power, not only can the transmit power of the wireless charging device be made to match the charging voltage and/or charging current currently required by the battery, but the output current of the wireless charging receiver unit can also be made to meet the preset condition. Therefore, the heat generated during the charging process is reduced and the charging efficiency is improved. The following will elaborate on the case where the received charging power does not meet the charging power required by the battery and/or the output current of the wireless charging receiver unit is not in the preset current required range.

Understandably, in order to improve the charging power and the charging speed, the wireless charging device may adjust the transmit power thereof by adjusting operating parameters such as the duty ratio of the at least one switch, the operating frequency and the transmit voltage, thereby making the received charging power meet the charging power required by the battery. In this regard, three ways are included as follows.

Optionally, the sending the control instruction to the wireless charging device, upon determining the received charging power does not meet the charging power required by the battery and/or the output current is not in the preset current required range, includes:
sending, via wireless communication between the device to-be-charged and the wireless charging device, a first control instruction to the wireless charging device upon determining the received charging power does not meet the charging power required by the battery, where the first control instruction is configured to instruct the wireless charging device to adjust the duty ratio of the at least one switch so as to adjust the transmit power.

Optionally, the sending the control instruction to the wireless charging device, upon determining the received charging power does not meet the charging power required by the battery and/or the output current is not in the preset current required range, includes:
sending, via wireless communication between the device to-be-charged and the wireless charging device, a second control instruction to the wireless charging device upon determining the received charging power does not meet the charging power required by the battery, where the second control instruction is configured to instruct the wireless charging device to adjust the operating frequency so as to adjust the transmit power.

Optionally, the sending the control instruction to the wireless charging device, upon determining the received charging power does not meet the charging power required by the battery and/or the output current is not in the preset current required range, includes:
sending, via wireless communication between the device to-be-charged and the wireless charging device, a third control instruction to the wireless charging device upon determining the received charging power does not meet the charging power required by the battery, where the third control instruction is configured to instruct the wireless charging device to adjust the transmit voltage so as to adjust the transmit power.

It should also be noted that, when the received charging power does not meet the charging power required by the battery, generally, a variable-frequency operating mode is first selected for the wireless charging. If the variable-frequency operating mode still cannot make the received charging power meet the charging power required by the battery, at that time, a fixed-frequency operating mode may be selected for the wireless charging.

Specifically, when the received charging power does not meet the charging power required by the battery, and it is assumed that the wireless charging is performed in the variable-frequency operating mode, at that time, the transmit voltage of the wireless charging device remains unchanged, and the transmit power of the wireless charging device may be adjusted by adjusting the duty ratio of the at least one switch or the operating frequency, thereby adjusting the charging power received by the wireless charging receiver unit. In addition, the output current of the wireless charging receiver unit needs to be in the preset current required range, so as to control the heat generated by the coil. In other words, by adjusting the duty ratio of the at least one switch or the operating frequency, the output voltage of the wireless charging receiver unit can be adjusted. However, since the ratio of the transmitting coil and the receiving coil is generally set as 1:1, in the way of adjusting the duty ratio of the at least one switch or the operating frequency, the adjusted output voltage of the wireless charging receiver unit would not exceed the transmit voltage of the wireless charging device. Thus, if the wireless charging receiver unit requires a higher output voltage, the wireless charging device may work in the fixed-frequency operating mode. As such, the output voltage of the wireless charging receiver unit can be changed by adjusting the transmit voltage of the wireless charging device, to enable the wireless charging receiver unit to have a higher output voltage. In short, by adjusting the duty ratio of the at least one switch of the wireless charging device or the operating frequency of the wireless charging device, or even adjusting the transmit voltage of the wireless charging device, the charging power received by the wireless charging receiver unit of the device to-be-charged as well as the output voltage and output current of the wireless charging receiver unit can be adjusted. In practice, this may be set as required, and the embodiments of the present disclosure do not make specific limitation thereto.

Understandably, in order to control the heat generated by the coil, the output current of the wireless charging receiver unit may be detected based on the charging process of the device to-be-charged, in addition to the battery voltage and battery current, and it is determined whether the detected output current is in the preset current required range. Specifically, the wireless charging device may also adjust the transmit power by adjusting operating parameters such as the duty ratio of the at least one switch, the operating frequency and the transmit voltage, thereby making the output current in the preset current required range. In this regard, three ways are included as follows.

Optionally, the sending the control instruction to the wireless charging device, upon determining the received charging power does not meet the charging power required by the battery and/or the output current is not in the preset current required range, includes:
sending, based on wireless communication between the device to-be-charged and the wireless charging device, a fourth control instruction to the wireless charging device upon determining the output current is not in the preset current required range, where the fourth control instruction is configured to instruct the wireless charging device to adjust the duty ratio of the at least one switch so as to adjust the transmit power.

Optionally, the sending the control instruction to the wireless charging device, upon determining the received charging power does not meet the charging power required by the battery and/or the output current is not in the preset current required range, includes:
sending, based on wireless communication between the device to-be-charged and the wireless charging device, a fifth control instruction to the wireless charging device upon determining the output current is not in the preset current required range, where the fifth control instruction is configured to instruct the wireless charging device to adjust the operating frequency so as to adjust the transmit power.

Optionally, the sending the control instruction to the wireless charging device, upon determining the received charging power does not meet the charging power required by the battery and/or the output current is not in the preset current required range, includes:
sending, based on wireless communication between the device to-be-charged and the wireless charging device, a sixth control instruction to the wireless charging device upon determining the output current is not in the preset current required range, where the sixth control instruction is configured to instruct the wireless charging device to adjust the transmit voltage so as to adjust the transmit power.

It should be noted that, by adjusting the duty ratio of the at least one switch of the wireless charging device or the operating frequency of the wireless charging device, or even adjusting the transmit voltage of the wireless charging device, the output current of the wireless charging receiver unit can be adjusted. In practice, this may be set as required, and the embodiments of the present disclosure do not make specific limitation thereto.

In some implementations, the receiving, by the wireless charging receiver unit, an adjusted wireless charging signal sent from the wireless charging device, to charge the battery, includes:
receiving, by the wireless charging receiver unit, an adjusted wireless charging signal sent from the wireless charging device, and outputting, by the wireless charging receiver unit, an adjusted output voltage and an adjusted output current;
performing voltage converting processing on the adjusted output voltage and the adjusted output current, to obtain a charging voltage and a charging current; and
applying the charging voltage and the charging current to the battery, thereby charging the battery.

Further, in some implementations, the performing voltage converting processing on the adjusted output voltage and the adjusted output current to obtain the charging voltage and the charging current, includes:
performing, by a charge pump, voltage converting processing on the adjusted output voltage and the adjusted output current, to obtain the charging voltage and the charging current.

It should be noted that the device to-be-charged includes a charging management unit, and the charging management unit may perform voltage converting processing on the adjusted output voltage and the adjusted output current output by the wireless charging receiver unit to obtain the charging voltage and the charging current, and the charging voltage and the charging current may be applied to the battery, thereby charging the battery. In the embodiments of the present disclosure, the charging management unit may be a boost conversion unit, a buck conversion unit, a buck-boost conversion unit, or a charge pump, or it may even be a direct charging unit and the like, which is not specifically limited in the embodiments of the present disclosure.

Here it is illustrated by taking the charge pump as an example. The charge pump is composed of multiple switching devices. The amount of heat generated by the current flowing through the switching devices is small, which is almost equivalent to a case where the current directly flows through a wire. By utilizing the charge pump to perform the voltage converting processing on the adjusted output voltage and the adjusted output voltage, not only can an effect of reducing the voltage be achieved, but the amount of the generated heat is low. In addition, it is better for a voltage difference between the adjusted output voltage and the charging voltage obtained after the voltage converting processing to be as small as possible. In the embodiments of the preset application, by adjusting the transmit power of the wireless charging device, the voltage difference between the output voltage of the wireless charging receiver unit and the battery voltage can be controlled, the heat generated during the process of charging the device to-be-charged is further reduced, and the charging efficiency is further improved.

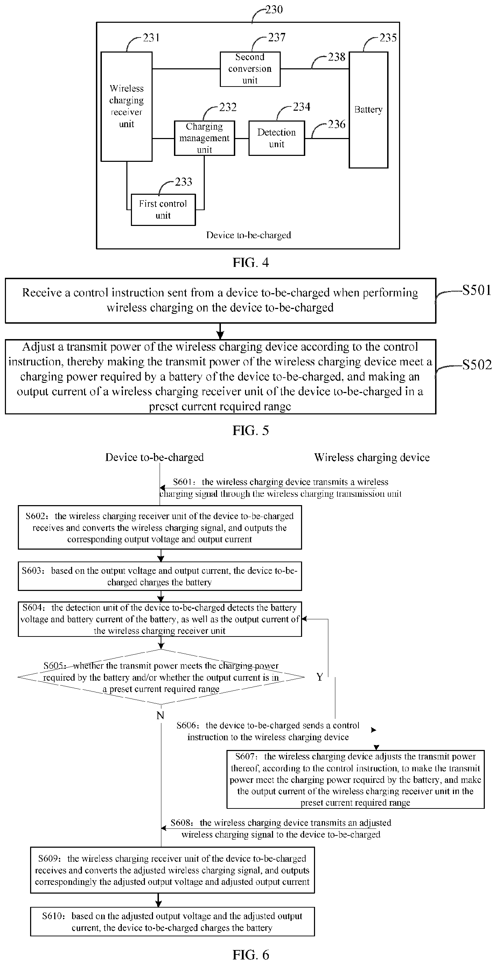

Referring to FIG. 4, a schematic diagram of the structural composition of a device to-be-charged according to the embodiments of the present disclosure is illustrated. As shown in FIG. 4, the device to-be-charged 230 may further include a second conversion unit 237 and a second charging channel 238. The second charging channel 238 may be a wire. The second conversion unit 237 may be provided on the second charging channel 238, to perform voltage control on the direct current output by the wireless charging receiver unit 231, so as to obtain an output voltage and an output current of the second charging channel 238 to charge the battery 235.

In some implementations, the second conversion unit 237 may include a step-down circuit, and is configured to output constant current and/or constant voltage electric energy.

In the case where the second charging channel 238 is used to charge the battery 235, the wireless charging transmission unit 222 may adopt a constant transmit power. After the wireless charging signal is received by the wireless charging receiver unit 231, it is processed by the second conversion unit 237 to obtain a voltage and a current meeting the charging demands of the battery 235, for output to and charging the battery 235. Those skilled in the art can understand that, in some implementations, the constant transmit power does not necessarily mean that the transmit power remains unchanged, and it rather can vary within a certain range. For example, the transmit power may be 7.5W, and it may fluctuate up and down by 0.5W.

In this embodiment, the first control circuit 233 is further configured to compare the detected output voltage value of a rectifier circuit of the wireless charging receiver unit 231 and a preset target value (for example, it may be set as the value of a maximum voltage to be output by the rectifier circuit), to determine an error value, and send to the second control unit 223 the error value in the form of a data packet.

In some implementations, in the case where the battery 235 is charged through the second charging channel 238, the wireless charging device 220 and the device to-be-charged 230 may perform the wireless charging according to the Qi standard. Therefore, by means of signal modulation, a data signal including the error value may be coupled to the coil of the wireless charging receiver unit 231, so as to be sent to the coil of the wireless charging transmission unit 222, and then transmitted to the second control unit 223. The second control unit 223 may adjust, according to the error information of the data packet, the transmission parameters of the wireless charging transmission unit 121 such as the operating frequency of the transmitting coil of the wireless charging transmission unit 121.

In the embodiment of the present disclosure, in the case where the battery 235 is charged through the second charging channel 238, the control over the wireless transmission of the electric energy may include operations as follows.

The first control unit 233 compares the detected output voltage value of the second charging channel 238 with the preset target value to determine the error value, and sends to the second control unit 223 the error value in the form of a data packet. The second control unit 223 determines a difference value based on the current value of the transmitting coil currently adopted and the error information of the data packet, and sets a new operating frequency based on the difference value to adjust the transmit power of the wireless charging transmission unit 222.

In the embodiments of the present disclosure, a charging mode in which the battery 235 is charged through the first charging channel 236 is referred to as a first charging mode, and a charging mode in which the battery 235 is charged through the second charging channel 238 is referred to as a second charging mode. The wireless charging device 220 and the device to-be-charged 230 may determine, based on a handshake, whether the first charging mode or the second charging mode is to be adopted for charging the battery 235.

In the embodiments of the present disclosure, on the side of the wireless charging device 220, the maximum transmit power of the wireless charging transmission unit 220 may be a first transmit power value when the device to-be-charged 230 is charged in the first charging mode, and the maximum transmit power of the wireless charging transmission unit 222 may be a second transmit power value when the device to-be-charged 230 is charged in the second charging mode. The first transmit power value is greater than the second transmit power value, and thus the charging speed of charging the device to-be-charged in the first charging mode is greater than that in the second charging mode.

On the side of the device to-be-charged 230, the first control unit 233 controls, according to the charging mode, the switching between the first charging channel 236 and the second charging channel 238. When the first charging mode is adopted, the first control unit 233 controls the charging management unit 232 on the first charging channel 236 to work. When the second charging mode is adopted, the first control unit 233 controls the second conversion unit 237 on the second charging channel 238 to work.

In some implementations, the device to-be-charged includes a first charging channel and a second charging channel, and a charging speed of the first charging channel is faster than a charging speed of the second charging channel. The method further includes:
detecting a battery temperature of the battery; and
controlling, based on the battery temperature, switching between the first charging channel and the second charging channel.

Further, in some embodiments, the method further includes:
establishing a handshake between the device to-be-charged and the wireless charging device; and
controlling the first charging channel to work when the handshake is successfully established; or
controlling the second charging channel to work when the handshake fails to be established.

It should be noted that, in conjunction with the device to-be-charged shown in FIG. 4, the device to-be-charged 230 includes the first charging channel 236 and the second charging channel 238, and the charging speed of the first charging channel 236 is faster than that of the second charging channel 238. In this way, by detecting the battery temperature of the battery 235, the first control unit 233 may control, based on the battery temperature, the switching between the first charging channel 236 and the second charging channel 238. In addition, the device to-be-charged 230 and the wireless charging device 220 may also determine, based on the handshake, whether the first charging channel 236 or the second charging channel 238 is to be adopted for charging the battery 235. When the handshake is successfully established, the first control unit 233 may control the first charging channel 236 to work; otherwise, the first control unit 233 may control the second charging channel 238 to work. Thus, the heat generated by the device to-be-charged can be reduced, and the charging speed can also be improved.

In some implementations, the wireless charging device supports a first wireless charging mode and a second wireless charging mode, a charging speed at which the wireless charging device charges the device to-be-charged in the first wireless charging mode is faster than that in the second wireless charge mode. The method further includes:
negotiating, based on wireless communication between the device to-be-charged and the wireless charging device, whether to use the first wireless charging mode or the second wireless charging mode for charging.

Further, in some implementations, the negotiating, based on wireless communication between the device to-be-charged and the wireless charging device, whether to use the first wireless charging mode or the second wireless charging mode for charging, includes:
establishing a handshake between the device to-be-charged and the wireless charging device; and
charging the battery based on the first wireless charging mode of the wireless charging device, when the handshake is successfully established; or
charging the battery based on the second wireless charging mode of the wireless charging device, when the handshake fails to be established.

It should be noted that, in conjunction with the wireless charging system shown in FIG. 2, the wireless charging device 220 may support the first wireless charging mode and the second wireless charging mode, and a charging speed at which the wireless charging device 220 charges the device to-be-charged 230 in the first wireless charging mode is faster than a charging speed at which the wireless charging device 220 charges the device to-be-charged 230 in the second wireless charging mode. In other words, compared with the wireless charging device 220 operating in the second wireless charging mode, the wireless charging device 220 operating in the first wireless charging mode takes a shorter time to fully charge the battery with the same capacity of the device to-be-charged 230.

Here, the second wireless charging mode may be referred to as a common wireless charging mode, for example, it may be a conventional wireless charging mode based on the QI standard, the PMA standard, or the A4WP standard. The first wireless charging mode may be a fast wireless charging mode. The common wireless charging mode may refer to a wireless charging mode in which the transmit power of the wireless charging device 220 is small (which is usually less than 15W, and the commonly used transmit power is 5W or 10W). In the common wireless charging mode, several hours would be taken to fully charge a large-capacity battery (for example, a battery with a capacity of 3000 mAh). In the fast wireless charging mode, the transmit power of the wireless charging device 220 is relatively large (which is usually greater than or equal to 15W). Compared with the common wireless charging mode, the wireless charging device 220 takes a shorter time to fully charge the battery with the same capacity in the fast wireless charging mode, that is, the charging speed thereof is faster.

In some implementations, the battery of the device to-be-charged includes a single cell battery or a battery having N cells connected in series, where N is a positive integer greater than or equal to 2.

Optionally, in some implementations, when the battery is in a constant voltage charging stage, the method further includes:
acquiring, in response to detecting the battery voltage is equal to a preset cut-off voltage, a first preset charging current, and performing constant current charging on the battery with the first preset charging current until the battery voltage reaches a first preset limit voltage, where the first preset limit voltage is greater than or equal to the preset cut-off voltage;
controlling the first preset charging current to be decreased, in a K-th time, with a preset step to obtain a K-th preset charging current, and performing the constant current charging on the battery with the K-th preset charging current until the battery voltage reaches a K-th preset limit voltage, where aK+1-th preset limit voltage is greater than or equal to the K-th preset limit voltage, and K is a positive integer greater than or equal to 1; and
stopping, in response to detecting the battery voltage reaches the K-th preset limit voltage, charging the battery.

Optionally, in some implementations, when the battery is in a constant voltage charging stage, the method further includes:
acquiring, in response to detecting the battery voltage is equal to a preset cut-off voltage, a first preset charging current, and performing constant current charging on the battery with the first preset charging current until the battery voltage reaches a first preset limit voltage, where the first preset limit voltage is greater than or equal to the preset cut-off voltage;
controlling the first preset charging current to be decreased, in a K-th time, with a preset step to obtain a K-th preset charging current, and performing the constant current charging on the battery with the K-th preset charging current until the battery voltage reaches a K-th preset limit voltage, where a K+1-th preset limit voltage is greater than or equal to the K-th preset limit voltage, and K is a positive integer greater than or equal to 1; and
performing constant voltage charging on the battery with the K-th preset limit voltage, and stopping, in response to detecting the battery current is less than or equal to a preset cut-off current, charging the battery.

It should be noted that the battery 235 provided in the embodiments of the present disclosure may include one cell, or may include N cells connected in series (N is a positive integer greater than or equal to 2). Taking N=2 as an example, the battery 235 may include a first cell and a second cell which are connected in series with each other. Here, it is illustrated by taking a case where the charging power is equal to 20W and the charging voltage of each cell is equal to 5V as an example. In order to meet the charging voltage requirements of the two series-connected cells, the output voltage/output current of the first charging channel 236 needs to be maintained at 10V/2A. In this way, the wireless charging transmission unit 222 generates the wireless charging signal based on 10V/2A. Accordingly, the wireless charging receiver unit 231 converts the wireless charging signal into an output voltage/output current of 10V/2A. Since the current is reduced from 4A to 2A, the heat generated during the power transmission would be reduced accordingly. Therefore, in the embodiments of the present disclosure, multiple cells connected in series may also be used to reduce the heat generated by the wireless charging transmission unit 222 and the wireless charging receiver unit 231.

In the above description, it is illustrated by taking N=2 as an example. In practice, the value of N may be 3 or a positive integer greater than 3. The more the cells connected in series with each other, the smaller the amount of heat generated by the electric energy passing through the wireless charging transmission unit 222 and the wireless charging receiver unit 231.

It should also be noted that, the embodiments of the present disclosure further modify the structure of the battery of the device to-be-charged 230, in order to ensure the charging speed and further alleviate the heating problem of the device to-be-charged 230. In particular, multiple cells connected in series are introduced. Compared with the solution adopting a single cell, the charging current required by the multiple cells is 1/N of the charging current required by the single cell (N is the number of the cells connected in series in the device to-be-charged 230) for achieving a same charging speed. In other words, under the premise of ensuring the same charging speed, the embodiments of the present disclosure can greatly reduce the magnitude of the charging current, thereby further reducing the heat generated by the device to-be-charged 230 during the charging process.

In the embodiments of the present disclosure, the multiple cells may have the same or similar specifications and parameters, which is convenient for unified management and is beneficial to improve the overall performance and service life of the multiple cells.

During the charging process, the electric energy output by the first charging channel or the second charging channel is used to charge the multiple series-connected cells. In a process of supplying power, the voltage of the multiple cells may be reduced by the charging management unit or the second conversion unit, and then is used to power the device to-be-charged 230. Alternatively, one of the multiple cells may also be used to power the device to-be-charged.

In order to keep the power of the multiple cells balanced, power balance processing may be performed on the multiple cells by a balance circuit, during the charging and discharging processes. The balance circuit may be implemented in many ways. For example, a load may be connected at both ends of a cell to consume the power of the cell, so as to keep the power of the cell consistent with the power of other cells, and thus make the voltages of the various cells consistent with each other. Alternatively, it is possible to charge a cell having a low power with a cell having a high power until the voltages of the various cells are the same.

As mentioned above, the charging process of the battery may include one or more of a trickle charging stage, a constant current charging phase and a constant voltage charging phase. In the embodiments of the present disclosure, in order to further increase the charging speed, the charging duration of the constant voltage charging stage may be shortened or the constant voltage charging stage may be eliminated, by controlling the charging voltage and the charging current. In this way, the charging speed can be greatly improved compared with the charging processes in the related art.

In some implementations, a preset limit voltage Vn higher than a preset cut-off voltage of the battery may be provided, and a plurality of preset charging currents [I1, I2, I3,..., In] may be provided, where n is a positive integer greater than or equal to 1, and I1≥I2≥I3......≥In. It should be understood that the preset limit voltage Vn is related to the battery system and materials used therefor. In some implementations, if the preset cut-off voltage (which may be the standard cut-off voltage of the battery) is V0, Vn may be set as V0+ΔV For example, ΔV may be a value between 0.05V and 0.1V. The values of the charging current I1, I2,..., In are also related to the battery system and the materials used therefor.

After the battery system is determined, the battery capacity is determined. According to the relationship among the charging voltage, charging current, charging duration and battery capacity, the preset charging current at different phases may be determined when the charging voltage is equal to the preset limit voltage Vn. In some implementations, the difference between two adjacent preset charging currents I1, I2, I3,..., In may be set as ΔI, for example, ΔI may be a value between 100mA and 1A.

In some implementations, no matter whether the first charging channel or the second charging channel mentioned above is used, once the battery voltage reaches the preset cut-off voltage, constant current charging is performed on the battery with the preset charging current I1 until the battery voltage reaches the preset limit voltage Vn. After the constant current charging performed on the battery with the preset charging current I1 is stopped, the voltage would drop at some extent. Therefore, the constant current charging is further performed on the battery with the preset charging current I2, until the battery voltage reaches the preset limit voltage Vn. The above operations are repeated until the preset limit voltage Vn is reached by performing the constant current charging with the last preset charging current In, and then the charging may be stopped. In this way, by setting the preset limit voltage Vn and the preset charging current at various phrases, the constant voltage charging stage in the related technology can be eliminated, and the charging duration can be greatly shortened.

In other implementations, no matter whether the first charging channel or the second charging channel mentioned above is used, once the battery voltage reaches the preset cut-off voltage, constant current charging is performed on the battery with the preset charging current I1 until the battery voltage reaches the preset limit voltage Vn. Thereafter, the constant current charging is further performed on the battery with the preset charging current I2, until the battery voltage reaches the preset limit voltage Vn. The above operations are repeated until the preset limit voltage Vn is reached by performing the constant current charging with the last preset charging current In. Then, constant voltage charging is performed by using Vn as the charging voltage, for a preset time period or until the charging current decreases to a preset value. Thereafter, the charging may be stopped. Different from the elimination of the constant voltage charging stage in the above implementation, in this implementation, the duration in which the constant voltage charging is performed is reduced due to the increased charging cut-off voltage; and therefore, the charging duration can also be greatly shortened compared with the related technology.

In the case where the battery has multiple cells, in the above method, it is necessary to monitor whether the voltage of each cell reaches the preset cut-off voltage and the preset limit voltage. Once the voltage of any cell reaches the preset cut-off voltage or the preset limit voltage, the charging current used for the constant current charging is changed. Alternatively, in some implementations, a charging circuit of the cell(s) whose voltage has reached the preset cut-off voltage or the preset limit voltage may be disconnected, and other cells whose voltage has not reached the preset cut-off voltage or the preset limit voltage may continue to be charged. That is, each cell may be independently charged according to the above-mentioned charging process.

The foregoing embodiments provide a charging control method, which is applied to a device to-be-charged. A battery voltage and a battery current of a battery as well as an output current of a wireless charging receiver unit of the device to-be-charged are first detected. According to the detected battery voltage, the detected battery current and the detected output current, a control instruction is sent to a wireless charging device. Then, an adjusted wireless charging signal sent from the wireless charging device is received by the wireless charging receiver unit to charge the battery. The control instruction is configured to instruct the wireless charging device to adjust a transmit power thereof, thereby making the transmit power of the wireless charging device meet a charging power required by the battery, and making the output current of the wireless charging receiver unit in a preset current required range. As such, during the process of charging the device to-be-charged, not only can the heat generated when charging the device to-be-charged be greatly reduced, but the charging efficiency can also be improved at the same time.

Referring to FIG. 5, a charging control method provided by the embodiments of the present disclosure is illustrated. The method is applied to a wireless charging device, and the method may include operations as follows.

At block S501, a control instruction sent from a device to-be-charged is received when performing wireless charging on the device to-be-charged.

At block S502, a transmit power of the wireless charging device is adjusted according to the control instruction, thereby making the transmit power of the wireless charging device meet a charging power required by a battery of the device to-be-charged, and making an output current of a wireless charging receiver unit of the device to-be-charged in a preset current required range.

It should be noted that, when the charging power received by the device to-be-charged does not meet the charging power required by the battery and/or the output current is not in the preset current required range, the device to-be-charged may send a control instruction to the wireless charging device. Then, the wireless charging device adjusts the transmit power according to the control instruction. Here, the wireless charging device may adjust the transmit power by adjusting parameters such as a duty ratio of the at least one switch, an operating frequency and a transmit voltage, which is not specifically limited in the embodiments of the present disclosure.

It should also be noted that "adjusting the transmit power of the wireless charging device according to the control instruction" may specifically include that: the wireless charging device first determines, according to the control instruction, a target transmit power value for the adjustment, and determines the corresponding target voltage value and target current value based on the target transmit power value, where the product of the target voltage value and the target current value is equal to the target transmit power value; and then, an adjusted transmit power is transmitted, by the wireless charging transmission unit, in the form of a wireless charging signal.

In some implementations, the adjusting, according to the control instruction, the transmit power of the wireless charging device includes:
receiving a first control instruction sent from the device to-be-charged; and adjusting, according to the first control instruction, the duty ratio of the at least one switch of the wireless charging device, so as to adjust the transmit power of the wireless charging device.

In some implementations, the adjusting, according to the control instruction, the transmit power of the wireless charging device includes:
receiving a second control instruction sent from the device to-be-charged; and adjusting, according to the second control instruction, the operating frequency of the wireless charging device, so as to adjust the transmit power of the wireless charging device.

In some implementations, the adjusting, according to the control instruction, the transmit power of the wireless charging device includes:
receiving a third control instruction sent from the device to-be-charged; and adjusting, according to the third control instruction, the transmit voltage of the wireless charging device, so as to adjust the transmit power of the wireless charging device.

In some implementations, the adjusting, according to the control instruction, the transmit power of the wireless charging device includes:
receiving a fourth control instruction sent from the device to-be-charged; and adjusting, according to the fourth control instruction, the duty ratio of the at least one switch of the wireless charging device, so as to adjust the transmit power of the wireless charging device.

In some implementations, the adjusting, according to the control instruction, the transmit power of the wireless charging device includes:
receiving a fifth control instruction sent from the device to-be-charged; and adjusting, according to the fifth control instruction, the operating frequency of the wireless charging device, so as to adjust the transmit power of the wireless charging device.

In some implementations, the adjusting, according to the control instruction, the transmit power of the wireless charging device includes:
receiving a sixth control instruction sent from the device to-be-charged; and adjusting, according to the sixth control instruction, the transmit voltage of the wireless charging device, so as to adjust the transmit power of the wireless charging device.

It should be noted that, via the wireless communication between the wireless charging device and the device to-be-charged, when the transmit power of the wireless charging device does not meet the charging power required by the battery of the device to-be-charged, the wireless charging device may adjust the transmit power thereof according to the received first instruction, second instruction or third instruction, thereby making the transmit power of the wireless charging device meet the charging power required by the battery of the device to-be-charged. And when the output current of the wireless charging receiver unit of the device to-be-charged is not in the preset current required range, the wireless charging device may adjust the transmit power thereof according to the received fourth instruction, fifth instruction or sixth instruction, thereby making the output current of the wireless charging receiver unit of the device to-be-charged in the preset current required range. In this way, by adjusting the transmit power, the transmit power of the wireless charging device may be made to meet the charging power required by the battery of the device to-be-charged, and the output current of the wireless charging receiver unit of the device to-be-charged nay be made to be in the preset current required range. Therefore, the heat generated by charging the device to-be-charged can be reduced, and the charging efficiency can also be improved.

It should also be noted that, in conjunction with the wireless charging system shown in FIG. 2, the wireless charging device 220 includes a voltage conversion unit (such as the first conversion unit 221 shown in FIG. 2), which may be configured to adjust the transmit voltage of the wireless charging device according to the third or sixth control instruction. Specifically, the first conversion unit 221 may be controlled by the second control unit 223 to change the output voltage of the first conversion unit 221, so as to realize the adjustment of the transmit voltage. Alternatively, an input voltage of the first conversion unit 221 may be controlled by the second control unit 223 (for example, the output voltage of the power supply device 210 shown in FIG. 2 is adjusted), which can also cause the output voltage of the first conversion unit 221 to be changed, so as to realize the adjustment of the transmit voltage. In practice, this may be specifically set as required, and the embodiments of the present disclosure do not make specific limitation thereto.

In some implementations, the wireless charging device supports a first wireless charging mode and a second wireless charging mode, a charging speed at which the wireless charging device charges the device to-be-charged in the first wireless charging mode is faster than that in the second wireless charge mode. The method further includes:
negotiating, based on wireless communication between the device to-be-charged and the wireless charging device, whether to use the first wireless charging mode or the second wireless charging mode for charging.

Further, in some implementations, the negotiating, based on wireless communication between the device to-be-charged and the wireless charging device, whether to use the first wireless charging mode or the second wireless charging mode for charging includes:
establishing a handshake between the device to-be-charged and the wireless charging device; and
controlling the wireless charging device to work in the first wireless charging mode to charge the device to-be-charged, when the handshake is successfully established; or
controlling the wireless charging device to work in the second wireless charging mode to charge the device to-be-charged, when the handshake fails to be established.

It should be noted that, in conjunction with the wireless charging system shown in FIG. 2, the wireless charging device 220 may support the first wireless charging mode and the second wireless charging mode, and a charging speed at which the wireless charging device 220 charges the device to-be-charged 230 in the first wireless charging mode is faster than a charging speed at which the wireless charging device 220 charges the device to-be-charged 230 in the second wireless charge mode. In this way, the wireless charging device 220 may determine, through the second control unit 223, the wireless charging mode to be adopted, based on the wireless communication with the device to-be-charged 230. For example, when the handshake is successfully established, the second control unit 223 may control the wireless charging device 220 to work in the first wireless charging mode to charge the device to-be-charged 230, which can greatly shorten the charging duration and improve the charging speed.

The foregoing embodiment provides a charging control method, which is applied to a wireless charging device. During the process of performing wireless charging on a device to-be-charged, a control instruction sent from the device to-be-charged is received. The transmit power of the wireless charging device is adjusted according to the control instruction, thereby making the transmit power of the wireless charging device meet a charging power required by a battery of the device to-be-charged, and making an output current of a wireless charging receiver unit of the device to-be-charged in a preset current required range. In this way, by adjusting the transmit power of the wireless charging device, the heat generated by charging the device to-be-charged can be reduced, and the charging efficiency can also be improved.

Based on the same inventive concept of the foregoing embodiments, referring to FIG. 6, a detailed flowchart of a charging control method provided by the embodiments of the present disclosure is illustrated. Based on the exemplary structure of the wireless charging system shown in FIG. 2, the detailed flow may include operations as follows.

At bock S601, the wireless charging device transmits a wireless charging signal through the wireless charging transmission unit.

At bock S602, the device to-be-charged receives the wireless charging signal through the wireless charging receiver unit, and the wireless charging receiver unit converts the wireless charging signal and outputs the corresponding output voltage and output current.

At bock S603, based on the output voltage and output current, the device to-be-charged charges the battery.

At bock S604, the device to-be-charged detects, by the detection unit, the battery voltage and battery current of the battery, as well as the output current of the wireless charging receiver unit.

At bock S605, it is determined whether the transmit power of the wireless charging device meets the charging power required by the battery and/or whether the output current of the wireless charging receiver unit is in a preset current required range.

At bock S606, upon determining the transmit power of the wireless charging device does not meet the charging power required by the battery and/or the output current of the wireless charging receiver unit is not in the preset current required range, the device to-be-charged sends a control instruction to the wireless charging device;

At bock S607, the wireless charging device receives the control instruction, and adjusts, according to the control instruction, the transmit power of the wireless charging device, thereby making the transmit power of the wireless charging device meet the charging power required by the battery, and making the output current of the wireless charging receiver unit in the preset current required range.

At bock S608, based on the adjusted transmit power, the wireless charging device transmits an adjusted wireless charging signal to the device to-be-charged.

At bock S609, the device to-be-charged receives the adjusted wireless charging signal through the wireless charging receiver unit, and the wireless charging receiver unit converts the adjusted wireless charging signal and outputs correspondingly the adjusted output voltage and adjusted output current.

At bock S610, based on the adjusted output voltage and the adjusted output current, the device to-be-charged charges the battery.

It should be noted that, when the charging power received by the device to-be-charged does not meet the charging power required by the battery of the device to-be-charged and/or the output current of the wireless charging receiver unit of the device to-be-charged is not in the preset current required range, the device to-be-charged may send a control instruction to the wireless charging device. Then, the wireless charging device adjusts the transmit power according to the control instruction. The transmit power may be adjusted by changing the duty ratio of the at least one switch, the operating frequency and the transmit voltage, which is not specifically limited in the embodiments of the disclosure.

The foregoing embodiment provides a charging control method, which is applied to a wireless charging system. The device to-be-charged is located on the surface of the wireless charging device, and energy transmission may be carried out between the wireless charging device and the device to-be-charged in the form of a wireless charging signal. During the process of charging a battery of the device to-be-charged, the transmit power of the wireless charging device may be adjusted to make the transmit power of the wireless charging device meet the charging power required by the battery of the device to-be-charged, and make the output current of the wireless charging receiver unit of the device to-be-charged in the preset current required range. Therefore, the heat generated by charging the device to-be-charged can be reduced, and the charging efficiency can also be improved.

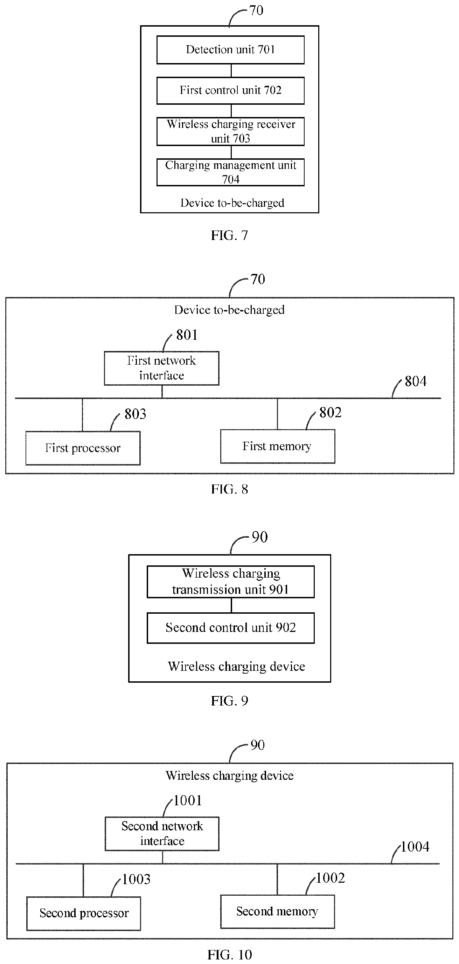

Based on the same inventive concept as the technical solution shown in FIG. 3, referring to FIG. 7, a composition of a device to-be-charged 70 provided by the embodiments of the present disclosure is illustrated. The device to-be-charged may include a detection unit 701, a first control unit 702, a wireless charging receiver unit 703 and a charging management unit 704.

The detection unit 701 is configured to detect a battery voltage and a battery current of a battery of the device to-be-charged, and detect an output current of the wireless charging receiver unit.

The first control unit 702 is configured to send, according to the detected battery voltage, the detected battery current and the detected output current, a control instruction to a wireless charging device, the control instruction is configured to instruct the wireless charging device to adjust a transmit power thereof, thereby making the transmit power of the wireless charging device meet a charging power required by the battery, and making the output current of the wireless charging receiver unit in a preset current required range.

The wireless charging receiver unit 703 is configured to receive an adjusted wireless charging signal sent from the wireless charging device.

The charging management unit 704 is configured to charge the battery according to the adjusted wireless charging signal.

In the above solution, the first control unit 702 is specifically configured to determine, according to the detected battery voltage and the detected battery current, whether a received charging power from the wireless charging device meets the charging power required by the battery; determine, according to the detected output current, whether the output current is in the preset current required range; and send the control instruction to the wireless charging device, upon determining the received charging power does not meet the charging power required by the battery and/or the output current is not in the preset current required range.

In the above solution, the first control unit 702 is specifically configured to: determine whether the battery current is in a preset constant current range, and determine the received charging power does not meet the charging power required by the battery upon determining the battery current is not in the preset constant current range, when the battery is in a constant current charging stage; and determine whether the battery voltage is in a preset constant voltage range, and determine the received charging power does not meet the charging power required by the battery upon determining the battery voltage is not in the preset constant voltage range, when the battery is in a constant voltage charging stage.

In the above solution, the first control unit 702 is specifically configured to send, via wireless communication between the device to-be-charged and the wireless charging device, a first control instruction to the wireless charging device when the received charging power does not meet the charging power required by the battery, where the first control instruction is configured to instruct the wireless charging device to adjust the duty ratio of the at least one switch so as to adjust the transmit power.

In the above solution, the first control unit 702 is specifically configured to send, via wireless communication between the device to-be-charged and the wireless charging device, a second control instruction to the wireless charging device when the received charging power does not meet the charging power required by the battery, where the second control instruction is configured to instruct the wireless charging device to adjust the operating frequency so as to adjust the transmit power.

In the above solution, the first control unit 702 is specifically configured to send, via wireless communication between the device to-be-charged and the wireless charging device, a third control instruction to the wireless charging device when the received charging power does not meet the charging power required by the battery, where the third control instruction is configured to instruct the wireless charging device to adjust the transmit voltage so as to adjust the transmit power.

In the above solution, the first control unit 702 is specifically configured to send, via wireless communication between the device to-be-charged and the wireless charging device, a fourth control instruction to the wireless charging device when the output current is not in the preset current required range, where the fourth control instruction is configured to instruct the wireless charging device to adjust the duty ratio of the at least one switch so as to adjust the transmit power.

In the above solution, the first control unit 702 is specifically configured to send, via wireless communication between the device to-be-charged and the wireless charging device, a fifth control instruction to the wireless charging device when the output current is not in the preset current required range, where the fifth control instruction is configured to instruct the wireless charging device to adjust the operating frequency so as to adjust the transmit power.

In the above solution, the first control unit 702 is specifically configured to send, via wireless communication between the device to-be-charged and the wireless charging device, a sixth control instruction to the wireless charging device when the output current is not in the preset current required range, where the sixth control instruction is configured to instruct the wireless charging device to adjust the transmit voltage so as to adjust the transmit power.

In the above solution, the wireless charging receiver unit 703 is specifically configured to receive the adjusted wireless charging signal sent from the wireless charging device, and output, according to the adjusted wireless charging signal, an adjusted output voltage and an adjusted output current.

The charging management unit 704 is specifically configured to perform voltage converting processing on the adjusted output voltage and the adjusted output current, to obtain a charging voltage and a charging current, and apply the charging voltage and the charging current to the battery, thereby charging the battery.

In the above solution, the charging management unit 704 is specifically configured to perform the voltage converting processing on the adjusted output voltage and the adjusted output current by using a charge pump, to obtain the charging voltage and the charging current.

In the above solution, the detection unit 701 is further configured to detect a battery temperature of the battery.

The first control unit 702 is further configured to control, based on the battery temperature, switching between the first charging channel and the second charging channel.

In the above solution, the first control unit 702 is further configured to establish a handshake between the device to-be-charged and the wireless charging device; and control the first charging channel to work when the handshake is successfully established, or control the second charging channel to work when the handshake fails to be established.

In the above solution, the wireless charging device supports a first wireless charging mode and a second wireless charging mode, a charging speed at which the wireless charging device charges the device to-be-charged in the first wireless charging mode is faster than a charging speed at which the wireless charging device charges the device to-be-charged in the second wireless charge mode, and the first control unit 702 is further configured to negotiate, based on wireless communication between the device to-be-charged and the wireless charging device, whether to use the first wireless charging mode or the second wireless charging mode for charging.

In the above solution, the first control unit 702 is specifically configured to establish a handshake between the device to-be-charged and the wireless charging device; and charge the battery based on the first wireless charging mode of the wireless charging device, when the handshake is successfully established, or charge the battery based on the second wireless charging mode of the wireless charging device, when the handshake fails to be established.

In the above solution, the battery of the device to-be-charged 70 includes a single cell battery or a battery having N cells connected in series, where N is a positive integer greater than or equal to 2.

In the above solution, the first control unit 702 is further configured to: acquire, in response to detecting the battery voltage is equal to a preset cut-off voltage, a first preset charging current, and perform constant current charging on the battery with the first preset charging current until the battery voltage reaches a first preset limit voltage, where the first preset limit voltage is greater than or equal to the preset cut-off voltage; control the first preset charging current to be decreased, in a K-th time, with a preset step to obtain a K-th preset charging current, and perform constant current charging on the battery with the K-th preset charging current until the battery voltage reaches a K-th preset limit voltage, where a K+1-th preset limit voltage is greater than or equal to the K-th preset limit voltage, and K is a positive integer greater than or equal to 1; and stop, in response to detecting the battery voltage reaches the K-th preset limit voltage, charging the battery.

In the above solution, the first control unit 702 is further configured to: acquire, in response to detecting the battery voltage is equal to a preset cut-off voltage, a first preset charging current, and perform constant current charging on the battery with the first preset charging current until the battery voltage reaches a first preset limit voltage, where the first preset limit voltage is greater than or equal to the preset cut-off voltage; control the first preset charging current to be decreased, in a K-th time, with a preset step to obtain a K-th preset charging current, and perform constant current charging on the battery with the K-th preset charging current until the battery voltage reaches a K-th preset limit voltage, where a K+1-th preset limit voltage is greater than or equal to the K-th preset limit voltage, and K is a positive integer greater than or equal to 1; and perform constant voltage charging on the battery with the K-th preset limit voltage, and stop, in response to detecting the battery current is less than or equal to a preset cut-off current, charging the battery.

It can be understood that, in the embodiment, the term "unit" may be a part of a circuit, a part of a processor, a part of a program, software or the like; of course, it may also be a module, or may be non-modular. In addition, the constituent units in the embodiment may be integrated into one processing unit, or each unit may exist alone physically, or two or more units may be integrated into one unit. The above-mentioned integrated unit(s) may be implemented in hardware or software function modules.

If the integrated unit(s) is implemented in software function modules and is not sold or used as an independent product, it may be stored in a computer readable storage medium. Based on such understanding, an essential part of the technical solution of the embodiment or a part thereof that contributes to the related art or all or part of the technical solution may be embodied in the form of a software product. The computer software product is stored in a storage medium and includes several instructions which enable a computer device (which may be a personal computer, a server, a network device or the like) or a processor to execute all or part of the operations of the method described in the embodiments. The aforementioned storage medium may include: U disk, mobile hard disk, Read Only Memory (ROM), Random Access Memory (RAM), magnetic disk, optical disk and other media capable of storing program codes.

Accordingly, the embodiments provide a computer storage medium that stores a charging control program, where the charging control program, when being executed by a first processor, causes the operations of the method described in the technical solution shown in FIG. 3 to be implemented.

Based on the composition of the device to-be-charged 70 and the computer storage medium, referring to FIG. 8, a specific hardware structure of the device to-be-charged 70 provided by the embodiments of the present disclosure is illustrated. The device to-be-charged may include a first network interface 801, a first memory 802 and a first processor 803, where the various components are coupled together through the first bus system 804. It can be understood that the first bus system 804 is configured to implement connection and communication between these components; and in addition to a data bus, the first bus system 804 also includes a power bus, a control bus and a status signal bus.

Further, the first network interface 801 is configured to receive and send signals in the process of sending and receiving information to and from the wireless charging device.

The first memory 802 is configured to store a computer program capable of running on the first processor 803.

The first processor 803 is configured to execute the following operations when running the computer program:
detecting a battery voltage and a battery current of a battery of the device to-be-charged, and detecting an output current of a wireless charging receiver unit of the device to-be-charged;
sending, according to the detected battery voltage, the detected battery current and the detected output current, a control instruction to a wireless charging device, the control instruction is configured to instruct the wireless charging device to adjust a transmit power thereof, thereby making the transmit power of the wireless charging device meet a charging power required by the battery, and making the output current of the wireless charging receiver unit in a preset current required range; and
receiving, by the wireless charging receiver unit, an adjusted wireless charging signal sent from the wireless charging device, to charge the battery.

It can be understood that the first memory 802 in the embodiment of the present disclosure may be a volatile memory or a non-volatile memory, or may include both of a volatile memory and a non-volatile memory. The non-volatile memory may be a Read-Only Memory (ROM), a Programmable ROM (PROM), an Erasable PROM (EPROM), and an Electrically EPROM (EEPROM) or a flash memory. The volatile memory may be a Random Access Memory (RAM), which is used as an external cache. By way of exemplary but not restrictive description, many forms of RAM are available, such as Static RAM (SRAM), Dynamic RAM (DRAM), Synchronous DRAM (SDRAM), Double Data Rate SDRAM (DDRSDRAM), Enhanced SDRAM (ESDRAM), Synchlink DRAM (SLDRAM) and Direct Rambus RAM (DRRAM). The first memory 802 of the systems and devices described herein is intended to include, but is not limited to, these memories and any other suitable types of memory.

The first processor 803 may be an integrated circuit chip with a signal processing capability. In an implementation, each operation of the foregoing method may be implemented by a hardware integrated logic circuit or software instructions in the first processor 803. The first processor 803 may be a general-purpose processor, a Digital Signal Processor (DSP), an Application Specific Integrated Circuit (ASIC), a Field Programmable Gate Array (FPGA), or other programmable logic devices, logic devices of discrete gate circuits or transistors, and discrete hardware components, and may implement or execute the methods, operations and logical blocks disclosed in the embodiments of the present disclosure. The general-purpose processor may be for example a microprocessor or any conventional processor. The operations of the method disclosed in the embodiments of the present disclosure may be directly implemented by a hardware decoding processor, or implemented by a combination of hardware and software modules in the decoding processor. The software modules may be located in a storage medium which is mature in the field, such as a random access memory, a flash memory, a read-only memory, a programmable read-only memory, or an electrically erasable programmable memory and a register. The storage medium is located in the first memory 802, and the first processor 803 reads information in the first memory 802, and implements the operations of the foregoing method in combination with related hardware.

It can be understood that the embodiments described herein can be implemented by hardware, software, firmware, middleware, microcode, or a combination thereof. For the case of being implemented by hardware, the processing unit may be implemented in one or more of an Application Specific Integrated Circuit (ASIC), a Digital Signal Processor (DSP), a DSP Device (DSPD), a Programmable Logic Device (PLD), a Field-Programmable Gate Array (FPGA), a general-purpose processor, a controller, a microcontroller, a microprocessor, others electronic units for performing the functions described in the disclosure, or a combination thereof. For the case of being implemented by software, the technology described herein may be implemented through modules (for example, routines and functions) that perform the functions described herein. The software codes may be stored in the memory and executed by the processor. The memory may be implemented in the processor or external to the processor.

Optionally, as another implementation, the first processor 803 is further configured to execute the operations of the method in the technical solution shown in FIG. 3 when running the computer program.

Based on the same inventive concept as the technical solution shown in FIG. 5, referring to FIG. 9, the composition of a wireless charging device 90 provided by the embodiments of the present disclosure is illustrated. The wireless charging device 90 may include a wireless charging transmission unit 901 and a second control unit 902.

The wireless charging transmission unit 901 is configured to transmit a wireless charging signal.

The second control unit 902 is configured to receive a control instruction sent from a device to-be-charged, when performing wireless charging on the device to-be-charged; and adjust, according to the control instruction, a transmit power of the wireless charging device, thereby making the transmit power of the wireless charging device meet a charging power required by a battery of the device to-be-charged, and making an output current of a wireless charging receiver unit of the device to-be-charged in a preset current required range.

In the above solution, the second control unit 902 is specifically configured to receive a first control instruction sent from the device to-be-charged; and adjust, according to the first control instruction, a duty ratio of the at least one switch of the wireless charging device, so as to adjust the transmit power of the wireless charging device.

In the above solution, the second control unit 902 is specifically configured to receive a second control instruction sent from the device to-be-charged; and adjust, according to the second control instruction, an operating frequency of the wireless charging device, so as to adjust the transmit power of the wireless charging device.

In the above solution, the second control unit 902 is specifically configured to receive a third control instruction sent from the device to-be-charged; and adjust, according to the third control instruction, a transmit voltage of the wireless charging device, so as to adjust the transmit power of the wireless charging device.

In the above solution, the second control unit 902 is specifically configured to receive a fourth control instruction sent from the device to-be-charged; and adjusting, according to the fourth control instruction, the duty ratio of the at least one switch of the wireless charging device, so as to adjust the transmit power of the wireless charging device.

In the above solution, the second control unit 902 is specifically configured to receive a fifth control instruction sent from the device to-be-charged; and adjust, according to the fifth control instruction, the operating frequency of the wireless charging device, so as to adjust the transmit power of the wireless charging device.

In the above solution, the second control unit 902 is specifically configured to receive a sixth control instruction sent from the device to-be-charged; and adjust, according to the sixth control instruction, the transmit voltage of the wireless charging device, so as to adjust the transmit power of the wireless charging device.

In the above solution, the wireless charging device 90 supports a first wireless charging mode and a second wireless charging mode, a charging speed at which the wireless charging device 90 charges the device to-be-charged in the first wireless charging mode is faster than a charging speed at which the wireless charging device 90 charges the device to-be-charged in the second wireless charge mode, and the second control unit 902 is further configured to negotiate, based on wireless communication between the device to-be-charged and the wireless charging device, whether to use the first wireless charging mode or the second wireless charging mode for charging.

In the above solution, the second control unit 902 is specifically configured to establish a handshake between the device to-be-charged and the wireless charging device; and control the wireless charging device to work in the first wireless charging mode to charge the device to-be-charged, when the handshake is successfully established, or control the wireless charging device to work in the second wireless charging mode to charge the device to-be-charged, when the handshake fails to be established.

The embodiments provide a computer storage medium that stores a charging control program. The charging control program, when being executed by the second processor, causes the operations of the method described in the technical solution shown in FIG. 5 to be implemented.

Based on the composition of the above-mentioned wireless charging device 90 and the computer storage medium, referring to FIG. 10, a specific hardware structure of the wireless charging device 90 provided by the embodiments of the present disclosure is illustrated. The wireless charging device may include a second network interface 1001, a second memory 1002 and a second processor 1003, where the various components are coupled together through the second bus system 1004. It can be understood that the second bus system 1004 is configured to implement connection and communication between these components; and in addition to a data bus, the second bus system 1004 also includes a power bus, a control bus and a status signal bus.

Further, the second network interface 1001 is configured to receive and send signals in the process of sending and receiving information to and from the device to-be-charged.

The second memory 1002 is configured to store a computer program capable of running on the second processor 1003.

The second processor 1003 is configured to execute the following operations when running the computer program:
receiving a control instruction sent from a device to-be-charged when performing wireless charging on the device to-be-charged; and
adjusting, according to the control instruction, a transmit power of the wireless charging device, thereby making the transmit power of the wireless charging device meet a charging power required by a battery of the device to-be-charged, and making an output current of a wireless charging receiver unit of the device to-be-charged in a preset current required range.

Optionally, as another implementation, the second processor 1003 is further configured to execute the operations of the method in the technical solution shown in FIG. 5 when running the computer program.

It can be understood that the hardware function of the second memory 1002 is similar to the hardware function of the first memory 802, and the hardware function of the second processor 1003 is similar to the hardware function of the first processor 803, the details thereof are not described herein again.

It should be noted that the technical solutions described in the embodiments of the present disclosure may be combined arbitrarily without conflict.

The foregoing are only specific embodiments of the disclosure, and the protection scope of the disclosure is not limited thereto. Modifications or substitutions, which can be easily derived by any person skilled in the art within the technical scope disclosed in the disclosure, should be encompassed within the protection scope of the disclosure. Therefore, the protection scope of the disclosure should be subject to the protection scope of the claims.

### INDUSTRIAL APPLICABILITY

In the embodiments of the present disclosure, a battery voltage and a battery current of a battery as well as an output current of a wireless charging receiver unit of a device to-be-charged are first detected. According to the detected battery voltage and current as well as the detected output current, a control instruction is sent to a wireless charging device. The control instruction is configured to instruct the wireless charging device to adjust a transmit power thereof, thereby making the transmit power of the wireless charging device meet a charging power required by the battery of the device to-be-charged, and making the output current of the wireless charging receiver unit in a preset current required range. As such, not only can the charging efficiency of charging the device to-be-charged be improved, but a voltage difference between the output voltage of the wireless charging receiver unit and the battery voltage can be effectively controlled. Accordingly, an adjusted wireless charging signal sent from the wireless charging device is received by the wireless charging receiver unit to charge the battery. In this way, during the process of charging the device to-be-charged, not only can the heat generated by charging the device to-be-charged be reduced, but the charging efficiency can be improved at the same time.

## Claims

1. A charging control method, applicable to a device to-be-charged, the method comprising:
detecting a battery voltage and a battery current of a battery of the device to-be-charged, and detecting an output current of a wireless charging receiver unit of the device to-be-charged;
sending, according to the detected battery voltage, the detected battery current and the detected output current, a control instruction to a wireless charging device, wherein the control instruction is configured to instruct the wireless charging device to adjust a transmit power thereof, thereby making the transmit power of the wireless charging device meet a charging power required by the battery, and making the output current of the wireless charging receiver unit in a preset current required range; and
receiving, by the wireless charging receiver unit, an adjusted wireless charging signal sent from the wireless charging device, to charge the battery.

2. The method as claimed in claim 1, wherein the sending, according to the detected battery voltage, the detected battery current and the detected output current, a control instruction to a wireless charging device, comprises:
determining, according to the detected battery voltage and the detected battery current, whether a received charging power meets the charging power required by the battery;
determining, according to the detected output current, whether the output current is in the preset current required range; and
sending the control instruction to the wireless charging device, upon determining at least one of conditions: the received charging power does not meet the charging power required by the battery, and the output current is not in the preset current required range.

3. The method as claimed in claim 2, wherein the determining, according to the detected battery voltage and the detected battery current, whether a received charging power meets the charging power required by the battery, comprises:
when the battery is in a constant current charging stage, determining whether the battery current is in a preset constant current range, and determining the received charging power does not meet the charging power required by the battery upon determining the battery current is not in the preset constant current range; and
when the battery is in a constant voltage charging stage, determining whether the battery voltage is in a preset constant voltage range, and determining the received charging power does not meet the charging power required by the battery upon determining the battery voltage is not in the preset constant voltage range.

4. The method as claimed in claim 2, wherein the sending the control instruction to the wireless charging device, upon determining at least one of conditions: the received charging power does not meet the charging power required by the battery and the output current is not in the preset current required range, comprises:
sending, via wireless communication between the device to-be-charged and the wireless charging device, a first control instruction to the wireless charging device, upon determining the received charging power does not meet the charging power required by the battery, wherein the first control instruction is configured to instruct the wireless charging device to adjust a duty ratio of at least one switch so as to adjust the transmit power.

5. The method as claimed in claim 2, wherein the sending the control instruction to the wireless charging device, upon determining at least one of conditions: the received charging power does not meet the charging power required by the battery and the output current is not in the preset current required range, comprises:
sending, via wireless communication between the device to-be-charged and the wireless charging device, a second control instruction to the wireless charging device, upon determining the received charging power does not meet the charging power required by the battery, wherein the second control instruction is configured to instruct the wireless charging device to adjust an operating frequency thereof so as to adjust the transmit power.

6. The method as claimed in claim 2, wherein the sending the control instruction to the wireless charging device, upon determining at least one of conditions: the received charging power does not meet the charging power required by the battery and the output current is not in the preset current required range, comprises:
sending, via wireless communication between the device to-be-charged and the wireless charging device, a third control instruction to the wireless charging device, upon determining the received charging power does not meet the charging power required by the battery, wherein the third control instruction is configured to instruct the wireless charging device to adjust a transmit voltage thereof so as to adjust the transmit power.

7. The method as claimed in claim 2, wherein the sending the control instruction to the wireless charging device, upon determining at least one of conditions: the received charging power does not meet the charging power required by the battery and the output current is not in the preset current required range, comprises:
sending, via wireless communication between the device to-be-charged and the wireless charging device, a fourth control instruction to the wireless charging device, upon determining the output current is not in the preset current required range, wherein the fourth control instruction is configured to instruct the wireless charging device to adjust a duty ratio of at least one switch so as to adjust the transmit power.

8. The method as claimed in claim 2, wherein the sending the control instruction to the wireless charging device, upon determining at least one of conditions: the received charging power does not meet the charging power required by the battery and the output current is not in the preset current required range, comprises:
sending, via wireless communication between the device to-be-charged and the wireless charging device, a fifth control instruction to the wireless charging device, upon determining the output current is not in the preset current required range, wherein the fifth control instruction is configured to instruct the wireless charging device to adjust an operating frequency thereof so as to adjust the transmit power.

9. The method as claimed in claim 2, wherein the sending the control instruction to the wireless charging device, upon determining at least one of conditions: the received charging power does not meet the charging power required by the battery and the output current is not in the preset current required range, comprises:
sending, via wireless communication between the device to-be-charged and the wireless charging device, a sixth control instruction to the wireless charging device, upon determining the output current is not in the preset current required range, wherein the sixth control instruction is configured to instruct the wireless charging device to adjust a transmit voltage thereof so as to adjust the transmit power.

10. The method as claimed in any one of claims 1 to 9, wherein the receiving, by the wireless charging receiver unit, an adjusted wireless charging signal sent from the wireless charging device, to charge the battery, comprises:
receiving, by the wireless charging receiver unit, an adjusted wireless charging signal sent from the wireless charging device, and outputting, by the wireless charging receiver unit, an adjusted output voltage and an adjusted output current;
performing voltage converting processing on the adjusted output voltage and the adjusted output current, to obtain a charging voltage and a charging current; and
applying the charging voltage and the charging current to the battery, thereby charging the battery.

11. The method as claimed in claim 10, wherein the performing voltage converting processing on the adjusted output voltage and the adjusted output current to obtain a charging voltage and a charging current, comprises:
performing, by a charge pump, voltage converting processing on the adjusted output voltage and the adjusted output current, to obtain the charging voltage and the charging current.

12. The method as claimed in any one of claims 1 to 11, wherein the device to-be-charged comprises a first charging channel and a second charging channel, a charging speed of the first charging channel is faster than a charging speed of the second charging channel, and the method further comprises:
detecting a battery temperature of the battery; and
controlling, based on the battery temperature, switching between the first charging channel and the second charging channel.

13. The method as claimed in claim 12, further comprising:
establishing a handshake between the device to-be-charged and the wireless charging device; and
controlling the first charging channel to work when the handshake is successfully established; or
controlling the second charging channel to work when the handshake fails to be established.

14. The method as claimed in any one of claims 1 to 13, wherein the wireless charging device supports a first wireless charging mode and a second wireless charging mode, a charging speed at which the wireless charging device charges the device to-be-charged in the first wireless charging mode is faster than a charging speed at which the wireless charging device charges the device to-be-charged in the second wireless charge mode, and the method further comprises:
negotiating, based on wireless communication between the device to-be-charged and the wireless charging device, whether to use the first wireless charging mode or the second wireless charging mode for charging.

15. The method as claimed in claim 14, wherein the negotiating, based on wireless communication between the device to-be-charged and the wireless charging device, whether to use the first wireless charging mode or the second wireless charging mode for charging, comprises:
establishing a handshake between the device to-be-charged and the wireless charging device; and
charging the battery based on the first wireless charging mode of the wireless charging device, when the handshake is successfully established; or
charging the battery based on the second wireless charging mode of the wireless charging device, when the handshake fails to be established.

16. The method as claimed in any one of claims 1 to 15, wherein the battery of the device to-be-charged comprises a single cell battery and a battery having N cells connected in series, where N is a positive integer greater than or equal to 2.

17. The method as claimed in any one of claims 1 to 16, wherein when the battery is in a constant voltage charging stage, the method further comprises:
acquiring, in response to detecting the battery voltage is equal to a preset cut-off voltage, a first preset charging current, and performing constant current charging on the battery with the first preset charging current until the battery voltage reaches a first preset limit voltage, wherein the first preset limit voltage is greater than or equal to the preset cut-off voltage;
controlling the first preset charging current to be decreased, in a K-th time, with a preset step to obtain a K-th preset charging current, and performing the constant current charging on the battery with the K-th preset charging current until the battery voltage reaches a K-th preset limit voltage, wherein a K+1-th preset limit voltage is greater than or equal to the K-th preset limit voltage, and K is a positive integer greater than or equal to 1; and
stopping, in response to detecting the battery voltage reaches the K-th preset limit voltage, charging the battery.

18. The method as claimed in any one of claims 1 to 16, wherein when the battery is in a constant voltage charging stage, the method further comprises:
acquiring, in response to detecting the battery voltage is equal to a preset cut-off voltage, a first preset charging current, and performing constant current charging on the battery with the first preset charging current until the battery voltage reaches a first preset limit voltage, wherein the first preset limit voltage is greater than or equal to the preset cut-off voltage;
controlling the first preset charging current to be decreased, in a K-th time, with a preset step to obtain a K-th preset charging current, and performing the constant current charging on the battery with the K-th preset charging current until the battery voltage reaches a K-th preset limit voltage, wherein a K+1-th preset limit voltage is greater than or equal to the K-th preset limit voltage, and K is a positive integer greater than or equal to 1; and
performing constant voltage charging on the battery with the K-th preset limit voltage, and stopping, in response to detecting the battery current is less than or equal to a preset cut-off current, charging the battery.

19. A charging control method, applicable to a wireless charging device, the method comprising:
receiving a control instruction sent from a device to-be-charged, when performing wireless charging on the device to-be-charged; and
adjusting, according to the control instruction, a transmit power of the wireless charging device, thereby making the transmit power of the wireless charging device meet a charging power required by a battery of the device to-be-charged, and making an output current of a wireless charging receiver unit of the device to-be-charged in a preset current required range.

20. The method as claimed in claim 19, wherein the adjusting, according to the control instruction, a transmit power of the wireless charging device comprises:
receiving a first control instruction sent from the device to-be-charged; and
adjusting, according to the first control instruction, a duty ratio of at least one switch of the wireless charging device, so as to adjust the transmit power of the wireless charging device.

21. The method as claimed in claim 19, wherein the adjusting, according to the control instruction, a transmit power of the wireless charging device comprises:
receiving a second control instruction sent from the device to-be-charged; and
adjusting, according to the second control instruction, an operating frequency of the wireless charging device, so as to adjust the transmit power of the wireless charging device.

22. The method as claimed in claim 19, wherein the adjusting, according to the control instruction, a transmit power of the wireless charging device comprises:
receiving a third control instruction sent from the device to-be-charged; and
adjusting, according to the third control instruction, a transmit voltage of the wireless charging device, so as to adjust the transmit power of the wireless charging device.

23. The method as claimed in claim 19, wherein the adjusting, according to the control instruction, a transmit power of the wireless charging device comprises:
receiving a fourth control instruction sent from the device to-be-charged; and
adjusting, according to the fourth control instruction, a duty ratio of at least one switch of the wireless charging device, so as to adjust the transmit power of the wireless charging device.

24. The method as claimed in claim 19, wherein the adjusting, according to the control instruction, a transmit power of the wireless charging device comprises:
receiving a fifth control instruction sent from the device to-be-charged; and
adjusting, according to the fifth control instruction, an operating frequency of the wireless charging device, so as to adjust the transmit power of the wireless charging device.

25. The method as claimed in claim 19, wherein the adjusting, according to the control instruction, a transmit power of the wireless charging device comprises:
receiving a sixth control instruction sent from the device to-be-charged; and
adjusting, according to the sixth control instruction, a transmit voltage of the wireless charging device, so as to adjust the transmit power of the wireless charging device.

26. The method as claimed in any one of claims 19 to 25, wherein the wireless charging device supports a first wireless charging mode and a second wireless charging mode, a charging speed at which the wireless charging device charges the device to-be-charged in the first wireless charging mode is faster than a charging speed at which the wireless charging device charges the device to-be-charged in the second wireless charge mode, and the method further comprises:
negotiating, based on wireless communication between the device to-be-charged and the wireless charging device, whether to use the first wireless charging mode or the second wireless charging mode for charging.

27. The method as claimed in claim 26, wherein the negotiating, based on wireless communication between the device to-be-charged and the wireless charging device, whether to use the first wireless charging mode or the second wireless charging mode for charging, comprises:
establishing a handshake between the device to-be-charged and the wireless charging device; and
controlling the wireless charging device to work in the first wireless charging mode to charge the device to-be-charged, when the handshake is successfully established; or
controlling the wireless charging device to work in the second wireless charging mode to charge the device to-be-charged, when the handshake fails to be established.

28. A device to-be-charged, comprising a detection unit, a first control unit, a wireless charging receiver unit and a charging management unit, wherein:
the detection unit is configured to detect a battery voltage and a battery current of a battery of the device to-be-charged, and detect an output current of the wireless charging receiver unit;
the first control unit is configured to send, according to the detected battery voltage, the detected battery current and the detected output current, a control instruction to a wireless charging device, the control instruction is configured to instruct the wireless charging device to adjust a transmit power thereof, thereby making the transmit power of the wireless charging device meet a charging power required by the battery of the device to-be-charged, and making the output current of the wireless charging receiver unit of the device to-be-charged in a preset current required range;
the wireless charging receiver unit is configured to receive an adjusted wireless charging signal sent from the wireless charging device; and
the charging management unit is configured to charge the battery according to the adjusted wireless charging signal.

29. The device to-be-charged as claimed in claim 28, wherein the first control unit is specifically configured to:
determine, according to the detected battery voltage and the detected battery current, whether a received charging power meets the charging power required by the battery;
determine, according to the detected output current, whether the output current is in the preset current required range; and
send the control instruction to the wireless charging device, upon determining at least one of conditions: the received charging power does not meet the charging power required by the battery, and the output current is not in the preset current required range.

30. The device to-be-charged as claimed in claim 29, wherein the first control unit is specifically configured to:
determine whether the battery current is in a preset constant current range when the battery is in a constant current charging stage, and determine the received charging power does not meet the charging power required by the battery upon determining the battery current is not in the preset constant current range; and
determine whether the battery voltage is in a preset constant voltage range when the battery is in a constant voltage charging stage, and determine the received charging power does not meet the charging power required by the battery upon determining the battery voltage is not in the preset constant voltage range.

31. The device to-be-charged as claimed in claim 29, wherein the first control unit is specifically configured to:
send, via wireless communication between the device to-be-charged and the wireless charging device, a first control instruction to the wireless charging device when the received charging power does not meet the charging power required by the battery, wherein the first control instruction is configured to instruct the wireless charging device to adjust a duty ratio of at least one switch so as to adjust the transmit power.

32. The device to-be-charged as claimed in claim 29, wherein the first control unit is specifically configured to:
send, via wireless communication between the device to-be-charged and the wireless charging device, a second control instruction to the wireless charging device when the received charging power does not meet the charging power required by the battery, wherein the second control instruction is configured to instruct the wireless charging device to adjust an operating frequency so as to adjust the transmit power.

33. The device to-be-charged as claimed in claim 29, wherein the first control unit is specifically configured to:
send, via wireless communication between the device to-be-charged and the wireless charging device, a third control instruction to the wireless charging device when the received charging power does not meet the charging power required by the battery, wherein the third control instruction is configured to instruct the wireless charging device to adjust a transmit voltage so as to adjust the transmit power.

34. The device to-be-charged as claimed in claim 29, wherein the first control unit is specifically configured to:
send, via wireless communication between the device to-be-charged and the wireless charging device, a fourth control instruction to the wireless charging device when the output current is not in the preset current required range, wherein the fourth control instruction is configured to instruct the wireless charging device to adjust a duty ratio of at least one switch so as to adjust the transmit power.

35. The device to-be-charged as claimed in claim 29, wherein the first control unit is specifically configured to:
send, via wireless communication between the device to-be-charged and the wireless charging device, a fifth control instruction to the wireless charging device when the output current is not in the preset current required range, wherein the fifth control instruction is configured to instruct the wireless charging device to adjust an operating frequency so as to adjust the transmit power.

36. The device to-be-charged as claimed in claim 29, wherein the first control unit is specifically configured to:
send, via wireless communication between the device to-be-charged and the wireless charging device, a sixth control instruction to the wireless charging device when the output current is not in the preset current required range, wherein the sixth control instruction is configured to instruct the wireless charging device to adjust a transmit voltage so as to adjust the transmit power.

37. The device to-be-charged as claimed in any one of claims 28 to 36, wherein the wireless charging receiver unit is specifically configured to receive an adjusted wireless charging signal sent from the wireless charging device, and output, according to the adjusted wireless charging signal, an adjusted output voltage and an adjusted output current;
the charging management unit is specifically configured to perform voltage converting processing on the adjusted output voltage and the adjusted output current, to obtain a charging voltage and a charging current, and apply the charging voltage and the charging current to the battery, thereby charging the battery.

38. The device to-be-charged as claimed in claim 37, wherein the charging management unit is specifically configured to perform voltage converting processing on the adjusted output voltage and the adjusted output current by using a charge pump, to obtain the charging voltage and the charging current.

39. The device to-be-charged as claimed in any one of claims 28 to 38, wherein the detection unit is further configured to detect a battery temperature of the battery; and
the first control unit is further configured to control, based on the battery temperature, switching between a first charging channel and a second charging channel.

40. The device to-be-charged as claimed in claim 39, wherein the first control unit is further configured to:
establish a handshake between the device to-be-charged and the wireless charging device; and
control the first charging channel to work when the handshake is successfully established; or
control the second charging channel to work when the handshake fails to be established.

41. The device to-be-charged as claimed in any one of claims 28 to 40, wherein the wireless charging device supports a first wireless charging mode and a second wireless charging mode, a charging speed at which the wireless charging device charges the device to-be-charged in the first wireless charging mode is faster than a charging speed at which the wireless charging device charges the device to-be-charged in the second wireless charge mode, and the first control unit is further configured to:
negotiate, based on wireless communication between the device to-be-charged and the wireless charging device, whether to use the first wireless charging mode or the second wireless charging mode for charging.

42. The device to-be-charged as claimed in claim 41, wherein the first control unit is specifically configured to:
establish a handshake between the device to-be-charged and the wireless charging device; and
charge the battery based on the first wireless charging mode of the wireless charging device, when the handshake is successfully established; or
charge the battery based on the second wireless charging mode of the wireless charging device, when the handshake fails to be established.

43. The device to-be-charged as claimed in any one of claims 28 to 42, wherein the battery of the device to-be-charged comprises a single cell battery and a battery having N cells connected in series, where N is a positive integer greater than or equal to 2.

44. The device to-be-charged as claimed in any one of claims 28 to 43, wherein the first control unit is further configured to:
acquire, in response to detecting the battery voltage is equal to a preset cut-off voltage, a first preset charging current, and perform constant current charging on the battery with the first preset charging current until the battery voltage reaches a first preset limit voltage, wherein the first preset limit voltage is greater than or equal to the preset cut-off voltage;
control the first preset charging current to be decreased, in a K-th time, with a preset step to obtain a K-th preset charging current, and perform constant current charging on the battery with the K-th preset charging current until the battery voltage reaches a K-th preset limit voltage, wherein a K+1-th preset limit voltage is greater than or equal to the K-th preset limit voltage, and K is a positive integer greater than or equal to 1; and
stop, in response to detecting the battery voltage reaches the N-th preset limit voltage, charging the battery.

45. The device to-be-charged as claimed in any one of claims 28 to 43, wherein the first control unit is further configured to:
acquire, in response to detecting the battery voltage is equal to a preset cut-off voltage, a first preset charging current, and perform constant current charging on the battery with the first preset charging current until the battery voltage reaches a first preset limit voltage, wherein the first preset limit voltage is greater than or equal to the preset cut-off voltage;
control the first preset charging current to be decreased, in a K-th time, with a preset step to obtain a K-th preset charging current, and perform constant current charging on the battery with the K-th preset charging current until the battery voltage reaches a K-th preset limit voltage, wherein a K+1-th preset limit voltage is greater than or equal to the K-th preset limit voltage, and K is a positive integer greater than or equal to 1; and
perform constant voltage charging on the battery with the K-th preset limit voltage, and stop, in response to detecting the battery current is less than or equal to a preset cut-off current, charging the battery.

46. A wireless charging device, comprising a wireless charging transmission unit and a second control unit, wherein,
the wireless charging transmission unit is configured to transmit a wireless charging signal; and
the second control unit is configured to:
receive a control instruction sent from a device to-be-charged, when performing wireless charging on the device to-be-charged; and
adjust, according to the control instruction, a transmit power of the wireless charging device, thereby making the transmit power of the wireless charging device meet a charging power required by a battery of the device to-be-charged, and making an output current of a wireless charging receiver unit of the device to-be-charged in a preset current required range.

47. The wireless charging device as claimed in claim 46, wherein the second control unit is specifically configured to:
receive a first control instruction sent from the device to-be-charged; and
adjust, according to the first control instruction, a duty ratio of at least one switch of the wireless charging device, so as to adjust the transmit power of the wireless charging device.

48. The wireless charging device as claimed in claim 46, wherein the second control unit is specifically configured to:
receive a second control instruction sent from the device to-be-charged; and
adjust, according to the second control instruction, an operating frequency of the wireless charging device, so as to adjust the transmit power of the wireless charging device.

49. The wireless charging device as claimed in claim 46, wherein the second control unit is specifically configured to:
receive a third control instruction sent from the device to-be-charged; and
adjust, according to the third control instruction, a transmit voltage of the wireless charging device, so as to adjust the transmit power of the wireless charging device.

50. The wireless charging device as claimed in claim 46, wherein the second control unit is specifically configured to:
receive a fourth control instruction sent from the device to-be-charged; and
adjust, according to the fourth control instruction, a duty ratio of at least one switch of the wireless charging device, so as to adjust the transmit power of the wireless charging device.

51. The wireless charging device as claimed in claim 46, wherein the second control unit is specifically configured to:
receive a fifth control instruction sent from the device to-be-charged; and
adjust, according to the fifth control instruction, an operating frequency of the wireless charging device, so as to adjust the transmit power of the wireless charging device.

52. The wireless charging device as claimed in claim 46, wherein the second control unit is specifically configured to:
receive a sixth control instruction sent from the device to-be-charged; and
adjust, according to the sixth control instruction, a transmit voltage of the wireless charging device, to adjust the transmit power of the wireless charging device.

53. The wireless charging device as claimed in any one of claims 46 to 52, wherein the wireless charging device supports a first wireless charging mode and a second wireless charging mode, a charging speed at which the wireless charging device charges the device to-be-charged in the first wireless charging mode is faster than a charging speed at which the wireless charging device charges the device to-be-charged in the second wireless charge mode, and the second control unit is further configured to:
negotiate, based on wireless communication between the device to-be-charged and the wireless charging device, whether to use the first wireless charging mode or the second wireless charging mode for charging.

54. The wireless charging device as claimed in claim 53, wherein the second control unit is specifically configured to:
establish a handshake between the device to-be-charged and the wireless charging device; and
control the wireless charging device to work in the first wireless charging mode to charge the device to-be-charged, when the handshake is successfully established; or
control the wireless charging device to work in the second wireless charging mode to charge the device to-be-charged, when the handshake fails to be established.

55. A device to-be-charged, comprising a first memory and a first processor, wherein,
the first memory is configured to store a computer program capable of running on the first processor; and
the first processor is configured to execute operations of the method as claimed in any one of claims 1 to 18 when running the computer program.

56. A wireless charging device, comprising a second memory and a second processor, wherein,
the second memory is configured to store a computer program capable of running on the second processor; and
the second processor is configured to execute operations of the method as claimed in any one of claims 19 to 27 when running the computer program.

57. A computer storage medium storing a charging control program, wherein the charging control program, when being executed by a first processor, causes operations of the method as claimed in any one of claims 1 to 18 to be implemented; or the charging control program, when being executed by a second processor, causes operations of the method as claimed in any one of claims 19 to 27 to be implemented.
